(19) Europäisches Patentamt
European Patent Office
Office européen des brevets

(11) EP 2 205 081 B1

(12) **EUROPÄISCHE PATENTSCHRIFT**

(45) Veröffentlichungstag und Bekanntmachung des Hinweises auf die Patenterteilung:
**01.05.2013 Patentblatt 2013/18**

(21) Anmeldenummer: **08802159.7**

(22) Anmeldetag: **13.09.2008**

(51) Int Cl.:
***A01N 43/40*** (2006.01) ***A01N 37/42*** (2006.01)
***A01N 37/52*** (2006.01) ***A01N 43/22*** (2006.01)
***A01N 43/36*** (2006.01) ***A01N 43/56*** (2006.01)
***A01N 43/58*** (2006.01) ***A01N 43/68*** (2006.01)
***A01N 43/707*** (2006.01) ***A01N 43/90*** (2006.01)
***A01N 47/02*** (2006.01) ***A01N 47/06*** (2006.01)
***A01N 47/30*** (2006.01) ***A01N 47/34*** (2006.01)
***A01N 47/38*** (2006.01)

(86) Internationale Anmeldenummer:
**PCT/EP2008/007609**

(87) Internationale Veröffentlichungsnummer:
**WO 2009/043442 (09.04.2009 Gazette 2009/15)**

(54) **WIRKSTOFFKOMBINATIONEN MIT INSEKTIZIDEN UND AKARIZIDEN EIGENSCHAFTEN**

ACTIVE AGENT COMBINATIONS HAVING INSECTICIDAL AND ACARICIDAL PROPERTIES

COMBINAISONS DE PRINCIPES ACTIFS AYANT DES PROPRIETES INSECTICIDES ET ACARICIDES

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **26.09.2007 DE 102007045922**

(43) Veröffentlichungstag der Anmeldung:
**14.07.2010 Patentblatt 2010/28**

(73) Patentinhaber: **Bayer CropScience AG**
**40789 Monheim (DE)**

(72) Erfinder:
- **HUNGENBERG, Heike**
**40764 Langenfeld (DE)**
- **JESCHKE, Peter**
**51467 Bergisch Gladbach (DE)**
- **VELTEN, Robert**
**40764 Langenfeld (DE)**
- **THIELERT, Wolfgang**
**51519 Odenthal (DE)**

(56) Entgegenhaltungen:
**EP-A- 0 539 588**
**WO-A-2006/037475**
**WO-A-2007/112843**
**WO-A-2007/112895**

Bemerkungen:
Die Akte enthält technische Angaben, die nach dem Eingang der Anmeldung eingereicht wurden und die nicht in dieser Patentschrift enthalten sind.

**EP 2 205 081 B1**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Beschrieben sind neue Wirkstoffkombinationen, die mindestens eine bekannte Verbindung der Formel (I) einerseits und mindestens einen weiteren bekannten Wirkstoff aus der Klasse der Makrolide, der Carboxylate oder anderer Klassen andererseits enthalten und sehr gut zur Bekämpfung von tierischen Schädlingen wie Insekten und unerwünschten Akariden geeignet sind. Beschrieben sind auch Verfahren zur Bekämpfung tierischer Schädlinge auf Pflanzen und Saatgut, die Verwendung der beschriebenen. Wirkstoffkombinationen zur Behandlung von Saatgut, ein Verfahren zum Schutz von Saatgut und nicht zuletzt das mit den beschriebenen Wirkstoffkombinationen behandelte Saatgut.

Es ist bereits bekannt, dass Verbindungen der Formel (I)

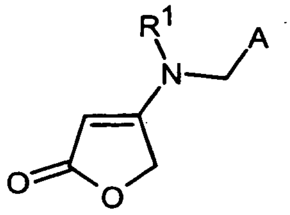

(I),

in welcher

A für Pyrid-2-yl oder Pyrid-4-yl steht oder für Pyrid-3-yl, welches gegebenenfalls in 6-Position substituiert ist durch Fluor, Chlor, Brom, Methyl, Trifluormethyl oder Trifluormethoxy oder für Pyridazin-3-yl, welches gegebenenfalls in 6-Position substituiert ist durch Chlor oder Methyl oder für Pyrazin-3-yl oder für 2-Chlor-pyrazin-5-yl oder für 1,3-Thiazol-5-yl, welches gegebenenfalls in 2-Position substituiert ist durch Chlor oder Methyl, oder

A für einen Rest Pyrimidinyl, Pyrazolyl, Thiophenyl, Oxazolyl, Isoxazolyl, 1,2,4-Oxadiazolyl, Isothiazolyl, 1,2,4-Triazolyl oder 1,2,5-Thiadiazolyl steht, welcher gegebenenfalls durch Fluor, Chlor, Brom, Cyano, Nitro, $C_1$-$C_4$-Alkyl (welches gegebenenfalls durch Fluor und/oder Chlor substituiert ist), $C_1$-$C_3$-Alkylthio (welches gegebenenfalls durch Fluor und/oder Chlor substituiert ist), oder $C_1$-$C_3$-Alkylsulfonyl (welches gegebenenfalls durch Fluor und/oder Chlor substituiert ist), substituiert ist,

oder

A für einen Rest

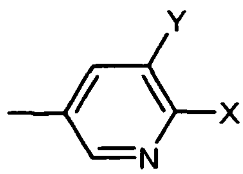

steht,
in welchem

X für Halogen, Alkyl oder Halogenalkyl steht

Y für Halogen, Alkyl, Halogenalkyl, Halogenalkoxy, Azido oder Cyan steht und

$R^1$ für Alkyl, Halogenalkyl, Alkenyl, Halogenalkenyl, Alkinyl, Cycloalkyl, Cycloalkylalkyl, Halogencycloalkyl, Alkoxy, Alkoxyalkyl, oder Halogencycloalkylalkyl steht,

insektizide Wirkung aufweisen (vgl. EP 0 539 588, WO 2007/115644, WO 2007/115643, WO 2007/115646).

Weiterhin ist bekannt, dass bestimmte Wirkstoffe aus der Klasse der Makrolide, der Carboxylate oder anderer Klassen insektizide und akarizide Eigenschaften aufweisen. Diese Verbindungen wurden in veröffentlichten Patentschriften und wissenschaftlichen Publikationen offenbart. Die meisten der hier beschriebenen insektiziden Verbindungen aus der Klasse der Makrolide, der Carboxylate oder anderer Klassen sind als Einzelwirkstoffe in Mitteln zur Bekämpfung

tierischer Schädlinge kommerziell erhältlich. Diese Verbindungen und Mittel sind in Kompendien wie "The Pesticide Manual, 14th edition, C. D. S. Thomlin (Ed.), British Crop Protection Council, Surrey, UK, 2006" beschrieben, auf das hiermit für die meisten der hier offenbarten Wirkstoffe aus der Klasse der Makrolide, der Carboxylate oder anderer Klassen verwiesen wird. Die Wirkstoffe, die weder kommerziell erhältlich sind noch im "Pesticide Manual" aufgelistet sind, werden durch die IUPAC Nummer und/oder die Strukturformel identifiziert.

Die Wirkung der insektiziden Verbindung der Formel (I) beziehungsweise des Wirkstoffs aus der Klasse der Makrolide, der Carboxylate oder anderer Klassen ist im Allgemeinen gut. Insbesondere bei niedrigen Aufwandmengen und bei bestimmten Schädlingen befriedigen sie jedoch nicht immer die Bedürfnisse der landwirtschaftlichen Praxis, und es besteht immer noch ein Bedarf an einer ökonomisch effizienten und ökologisch sicheren Schädlingsbekämpfung.

Weitere an insektizide Verbindungen gestellte Ansprüche schließen die Absenkung der Dosierungsmenge; eine wesentliche Verbreiterung des Spektrums zu bekämpfender Schädlinge einschließlich resistenter Schädlinge; eine erhöhte Anwendungssicherheit; eine verminderte Toxizität gegenüber Pflanzen und somit eine bessere Pflanzenverträglichkeit; die Bekämpfung der Schädlinge in ihren verschiedenen Entwicklungsstadien; ein besseres Verhalten während der Herstellung der insektiziden Verbindungen, zum Beispiel während des Vermahlens oder Mischens, während ihrer Lagerung oder während ihrer Anwendung; ein sehr vorteilhaftes biozides Spektrum selbst bei niedrigen Konzentrationen mit damit einhergehender guter Verträglichkeit durch Warmblüter, Fische und Pflanzen; und das Erzielen einer zusätzlichen Wirkung, zum Beispiel einer algiziden, anthelmintischen, aviziden, bakteriziden, fungiziden, molluskiziden, nematiziden, pflanzenaktivierenden, rodentiziden oder viruziden Wirkung.

Weitere spezifische Anforderungen an bei vegetativem und generativem Pflanzenvermehrungsmaterial verwendete insektizide Verbindungen schließen eine vernachlässigbare Phytotoxizität bei der Anwendung auf dem Saatgut und Pflanzenvermehrungsmaterial, eine Verträglichkeit mit Bodenbedingungen (z.B. was die Bindung der Verbindung an den Boden betrifft), eine systemische Wirkung in der Pflanze, keinen negativen Einfluss auf die Keimung und eine Wirksamkeit während des Lebenszyklus des entsprechenden Schädlings ein.

Aufgabe der Erfindung ist die Befriedigung eines oder mehrerer der oben erwähnten Ansprüche wie z.B. die Absenkung der Dosierungsmenge, eine Verbreiterung des bekämpfbaren Spektrums an Schädlungen einschließlich resistenter Schädlinge, und insbesondere die speziellen Anforderungen zur Anwendbarkeit auf vegetativem und generativem Pflanzenvermehrungsmaterial.

Es wurde nun gefunden, dass Kombinationen von mindestens einer Verbindung der Formel (I), ausgewählt aus der Gruppe bestehend aus (I-4) 4-{[(6-Chlorpyrid-3-yl)methyl](2-fluorethyl)amino}furan-2(5H)-on, (I-5) 4-{[(6-Chlorpyrid-3-yl)methyl](2,2-difluorethyl)amino}furan-2(51-1)-on, oder (I-6) 4-{[(6-Chlor-5-fluorpyrid-3-yl)methyl](methyl)amino}furan-2(5H)-on ist , und mindestens einer Verbindung ausgewählt aus der Gruppe bestehend aus

(A) Makroliden;

(2-1) Spinosad (bekannt aus EP-A 0 375 316)

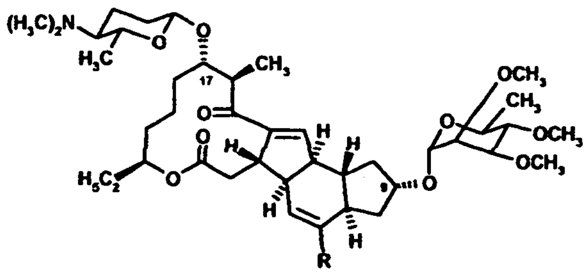

ein Gemisch aus bevorzugt

85 % Spinosyn A (R = H)

15 % Spinosyn B (R = $CH_3$)

(2-3) Abamectin (bekannt aus DE-A 27 17 040)

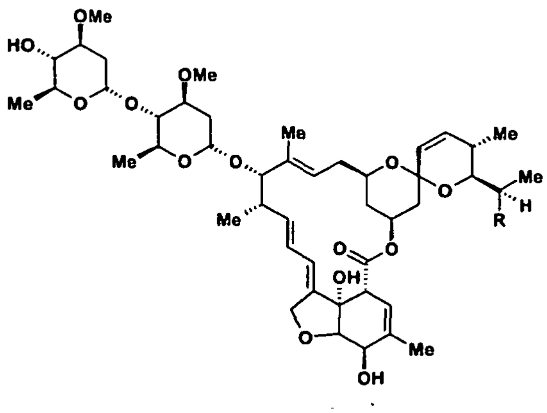

ein Gemisch aus bevorzugt
>80 % Avermectin $B_{1a}$ (R = $C_2H_5$)
<20 % Avermectin $B_{1b}$ (R = $CH_3$)
(2-4) Emamectin-Benzoat (bekannt aus EP-A 0 089 202)

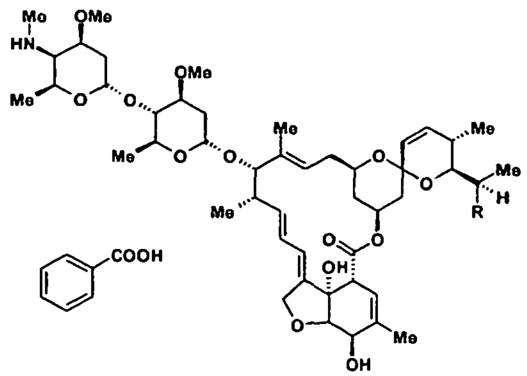

ein Gemisch aus bevorzugt
>90 % Emamectin $B_{1a}$ (R = $C_2H_5$)
<10 % Emamectin $B_{1b}$ (R = $CH_3$)
(2-5) Milbemectin (bekannt aus JP 50029742)

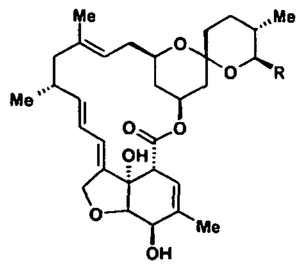

ein Gemisch aus bevorzugt
Milbemycin $A_3$ (R = $CH_3$) und
Emamectin $A_4$ (R = $C_2H_5$) im Verhältnis
von 3:7
(B) Carboxylaten;
(2-8) Indoxacarb (bekannt aus WO 92/11249)

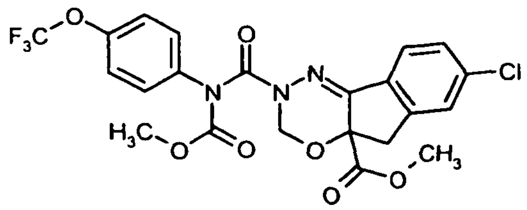

(C) Phenylpyrazol Insektiziden,
(2-9) Fipronil (bekannt aus EP-A 0 295 117)

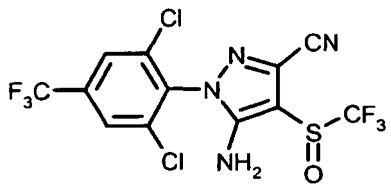

(2-10) Ethiprole (bekannt aus DE-A 196 53 417)

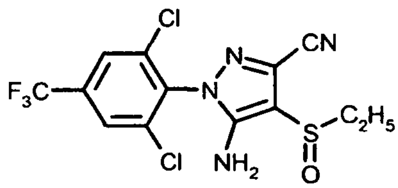

(E) Pyrrol Akariziden;
(2-14) Chlorfenapyr (bekannt aus EP-A 347 488)

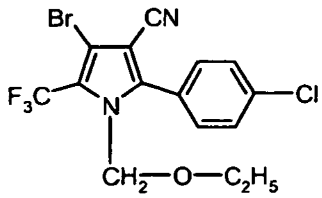

(F) Thioharnstoff Akariziden;
(2-15) Diafenthiuron (bekannt aus EP-A 210 487)
(H) Pyrazol Akariziden;
(2-19) Tebufenpyrad (bekannt EP-A 289 879)

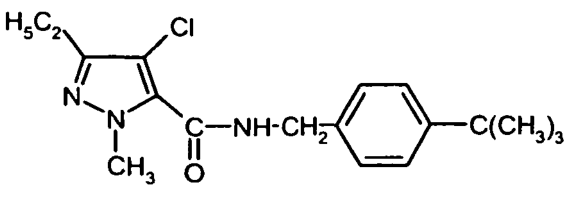

(2-20) Fenpyroximate (bekannt EP-A 234 045)

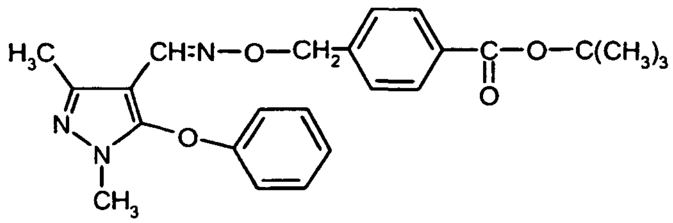

(2-21) Cyenopyrafen (ISO-proposed, NC-512) (1E)-2-Cyano-2-[4-(1,1-dimethylethyl)phenyl]-1-(1,3,4-trimethyl-1H-pyrazol-5-yl)ethenyl 2,2-dimethylpropanoat (bekannt aus JP 2003201280)

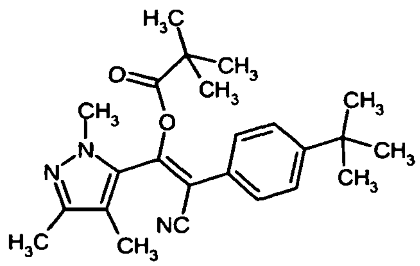

(K) Verbrückte Diphenyl Akariziden :

(2-29) Cyflumetofen (ISO-proposed, OK-5101) 2-Methoxyethyl-alpha-cyano-alpha-[4-(1,1,dimethylethyl)phenyl]-beta-oxo-2-(trifluoromethyl)benzenepropanoat (bekannt aus WO 2002014263)

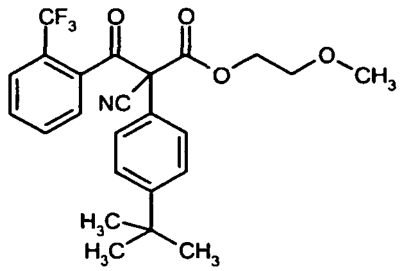

(L) Formamidine Akariziden,

(2-30) Amitraz (bekannt aus DE-A 02 061 132)

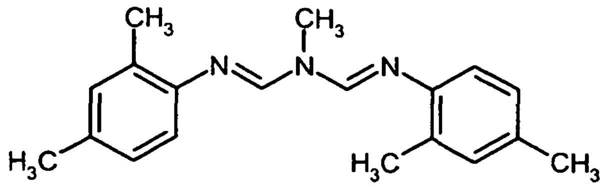

(M) Milben Wachstums Regulatoren (mite growth regulators),

(2-31) Cyromazine (bekannt aus DE-A 02 736 876)

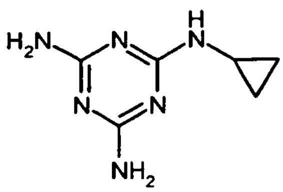

(P) Nichtklassifizierten Akariziden :

(2-40) Pyridaben (bekannt aus EP-A-134 439)

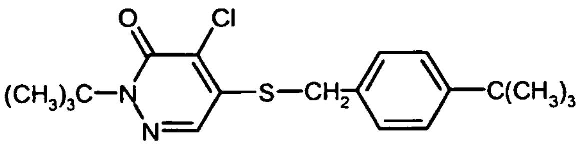

(Q) anderen insektizid oder akarizid wirksamen Substanzen;
(2-42) Flonicamid (bekannt aus EP-A 0 580 374)
(2-45) Pymetrozine (bekannt aus EP-A 0 314 615)

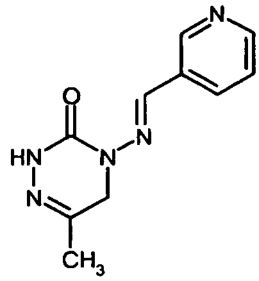

(2-46) Pyrifluquinazon (ISO-proposed, NNI-0101) 1-Acetyl-1,2,3,4-tetrahydro-3-[(3-pyridylmethyl)amino]-6-[1,2,2,2-tetrafluoro-1-(trifluoromethyl)ethyl] quinazolin-2-on (bekannt aus EP-A 01097932)

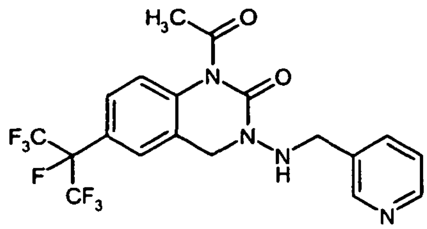

(2-47) Rynaxapyr (ISO-proposed; Chlorantraniliprole, DPX-E2Y45) (3-Bromo-N-{4-chlor-2-methyl-6-[(methylamino)carbonyl]phenyl} -1-(3-chlorpyridin-2-yl)-1H-pyrazol-5-carboxamid) (bekannt aus WO 03/015519)

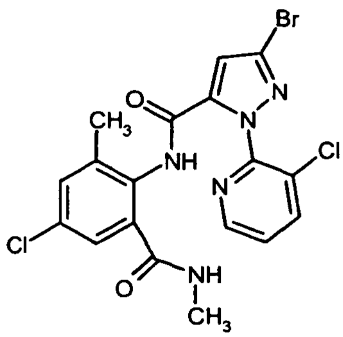

(2-49) Metaflumizone (ISO-proposed, BAS 320) 2-[2-(4-Cyanophenyl)-1-[3-(trifluoromethyl)phenyl]ethylidene]-N-[4-(trifluoromethoxy)phenyl] hydrazinecarboxamid (bekannt aus EP-A 00462456)

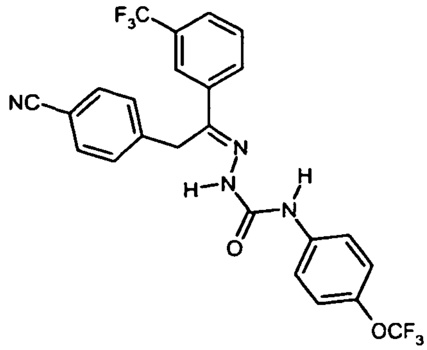

(2-53) dem Cyanoketon Akarizid IKA 2002; O-{(E)-2-(4-chlorophenyl)-2-cyano-1-[2-(trifluoromethyl)phenyl]ethenyl} S-methyl thiocarbonat (bekannt aus WO 98/35935)

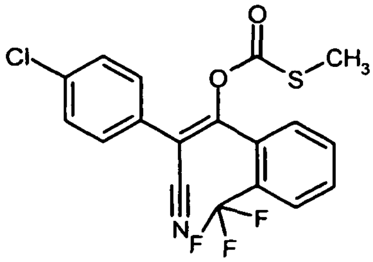

synergistisch wirksam sind und sich zur Bekämpfung tierischer Schädlinge eignen. Überraschenderweise ist die insektizide und akarizide Wirkung der erfindungsgemäßen Wirkstoffkombinationen wesentlich höher als die Summe der Wirkungen der einzelnen Wirkstoffe. Es liegt ein nicht vorhersehbarer echter synergistischer Effekt vor und nicht nur eine Wirkungsergänzung.

Die synergistische Wirkung von Wirkstoffkombinationen einer Verbindung der Formel (I) und eines Wirkstoffs aus der Klasse der Makrolide, der Carboxylate oder anderer Klassen erweitert den Wirkungsbereich der Verbindung der Formel (I) und des Wirkstoffs aus der Klasse der Makrolide, der Carboxylate oder anderer Klassen primär durch eine Verminderung der Dosierungsmenge und durch eine Erweiterung des Spektrums an bekämpfbaren Schädlingen. So lässt sich mit einer Wirkstoffkombination einer Verbindung der Formel (I) und eines Wirkstoffs aus der Klasse der Makrolide, der Carboxylate oder anderer Klassen immer noch ein hoher Grad an Schädlingsbekämpfung erzielen, selbst in Fällen, bei denen die einzelnen Verbindungen der erfindungsgemäßen Wirkstoffkombinationen bei den niedrigen angewendeten Aufwandmengen keine ausreichende Wirkung zeigen.

Zusätzlich zu der oben beschriebenen synergistischen Wirkung können die beschriebenen Wirkstoffkombinationen noch weitere überraschende Vorteile zeigen, einschließlich einer erhöhten Anwendungssicherheit; einer verminderten Phytotoxizität und somit einer besseren Pflanzenverträglichkeit; der Bekämpfung von Schädlingen in ihren verschiedenen Entwicklungsstadien; eines besseren Verhaltens während der Herstellung der insektiziden Verbindungen, zum Beispiel während des Vermahlens oder des Mixens, während ihrer Lagerung oder während ihrer Anwendung; eines sehr vorteilhaften bioziden Spektrums selbst bei niedrigen Konzentrationen mit damit einhergehender guter Verträglichkeit durch Warmblüter, Fische und Pflanzen; und des Erzielens einer zusätzlichen Wirkung, zum Beispiel einer algiziden, anthelmintischen, aviziden, bakteriziden, fungiziden, molluskiziden, nematiziden, pflanzenaktivierenden, rodentiziden oder viruziden Wirkung.

Weiterhin wurde überraschenderweise gefunden, dass sich die beschriebenen Wirkstoffkombinationen besonders zum Schutz von Samen und/oder Sprösslingen und Blättern einer aus den Samen herangezogenen Pflanze gegen eine Schädigung durch Schädlinge eignen. Die beschriebenen Wirkstoffkombinationen zeigen somit eine vernachlässigbare Phytotoxizität bei der Anwendung auf das Pflanzenfortpflanzungsmaterial, eine Verträglichkeit mit Bodenbedingungen (z.B. was die Bindung der Verbindung an den Boden betrifft), eine systemische Wirkung in der Pflanze, keinen negativen Einfluss auf die Keimung und Wirksamkeit während des entsprechenden Schädlingslebenszyklus.

Die beschriebenen Wirkstoffkombinationen enthalten neben mindestens einer Verbindung der Formel (I) mindestens einen der oben einzeln aufgeführten Wirkstoffe (2-1) bis (2-53). Bevorzugt enthalten die beschriebenen Wirkstoffkombinationen genau eine Verbindung der Formel (I) und genau einen der oben einzeln aufgeführten Wirkstoffe (2-1) bis (2-53). Weiterhin bevorzugt sind Wirkstoffkombinationen, die eine Verbindung der Formel (I) und zwei Verbindungen der oben einzeln aufgeführten Wirkstoffe (2-1) bis (2-53) enthalten. Weiterhin bevorzugt sind Mischungen, die zwei Verbindungen der Formel (I) und einen der Wirkstoffe (2-1) bis (2-53) enthalten.

Im Einzelnen seien die folgenden Verbindungen der allgemeinen Formel (I) genannt:

- Verbindung (1-4), 4-{[(6-Chlorpyrid-3-yl)methyl](2-fluorethyl)amino}furan-2(5H)-on, besitzt die Formel

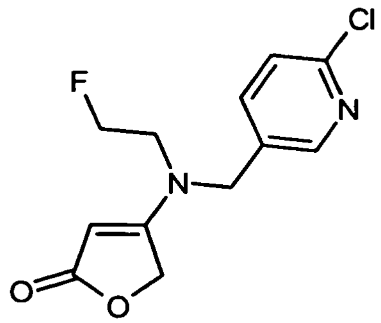

und ist bekannt aus der öffentlichten internationalen Patentanmeldung WO 2007/115644.

- Verbindung (1-5), 4-{[(6-Chlorpyrid-3-yl)methyl](2,2-difluorethyl)amino}furan-2(5H)-on, besitzt die Formel

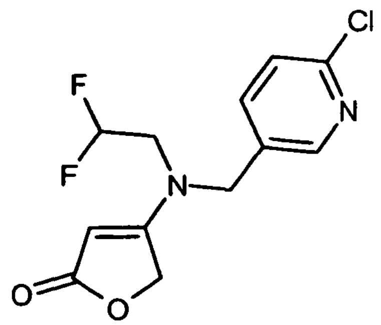

und ist bekannt aus der internationalen Patentanmeldung WO 2007/115644.

- Verbindung (1-6), 4-{[(6-Chlor-5-fluorpyrid-3-yl)methyl](methyl)amino}furan-2(5H)-on, besitzt die Formel

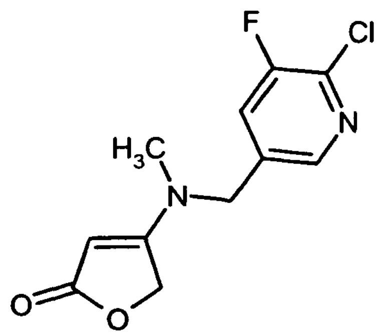

und ist bekannt aus der internationalen Patentanmeldung WO 2007/115643.

Die erfindungsgemäßen Wirkstoffkombinationen enthalten mindestens eine der Verbindungen der Formel (I), die ausgewählt ist aus der Gruppe bestehend aus den Verbindungen (I-4), (I-5), oder (I-6),
und mindestens eine Verbindung ausgewählt aus der Gruppe bestehend aus

(2-1) Spinosad

(2-3) Abamectin

(2-4) Emamectin-Benzoat

(2-5) Milbemectin

(2-8) Indoxacarb

(2-9) Fipronil

(2-10) Ethiprole

(2-14) Chlorfenapyr

(2-15) Diafenthiuron

(2-19) Tebufenpyrad

(2-20) Fenpyroximate

(2-21) Cyenopyrafen

(2-29) Cyflumetofen

(2-30) Amitraz

(2-31) Cyromazine

(2-40) Pyridaben

(2-42) Flonicamid

(2-45) Pymetrozine

(2-46) Pyrifluquinazon

(2-47) Rynaxapyr

(2-49) Metaflumizone

(2-53) IKA 2002; O-{(E)-2-(4-chlorophenyl)-2-cyano-1-[2-(trifluoromethyl)phenyl] ethenyl} S-methyl thiocarbonat.

Damit erhält man die in Tabelle 4 aufgeführten Kombinationen, wobei jede Kombination für sich eine bevorzugte erfindungsgemäße Ausführungsform darstellt.

**Tabelle 4**

| Wirkstoffkombination enthaltend | | | |
|---|---|---|---|
| **Nr. Wirkstoffkombination** | **Verbindung der Formel I** | | **Verbindung der Gruppe 2** |
| 4-1 | I-4 | und | (2-1) Spinosad |
| 4-3 | I-4 | und | (2-3) Abamectin |
| 4-4 | I-4 | und | (2-4) Emamectin-Benzoat |
| 4-5 | I-4 | und | (2-5) Milbemectin |
| 4-8 | I-4 | und | (2-8) Indoxacarb |
| 4-9 | I-4 | und | (2-9) Fipronil |

(fortgesetzt)

| Wirkstoffkombination enthaltend | | | |
|---|---|---|---|
| **Nr. Wirkstoffkombination** | **Verbindung der Formel I** | | **Verbindung der Gruppe 2** |
| 4-10 | I-4 | und | (2-10) Ethiprole |
| 4-14 | I-4 | und | (2-14) Chlorfenapyr |
| 4-15 | I-4 | und | (2-15) Diafenthiuron |
| 4-19 | I-4 | und | (2-19) Tebutenpyrad |
| 4-20 | I-4 | und | (2-20) Fenpyroximate |
| 4-21 | I-4 | und | (2-21) Cyenopyrafen |
| 4-29 | I-4 | und | (2-29) Cyflumetofen |
| 4-30 | I-4 | und | (2-30) Amitraz |
| 4-31 | I-4 | und | (2-31) Cyromazine |
| 4-40 | I-4 | und | (2-40) Pyridaben |
| 4-42 | I-4 | und | (2-42) Flonicamid |
| 4-45 | I-4 | und | (2-45) Pymetrozine |
| 4-46 | I-4 | und | (2-46) Pyrifluquinazon |
| 4-47<br>4-49 | I-4<br>I-4 | und<br>und | (2-47) Rynaxapyr<br>(2-49) Metaflumizone |
| 4-53 | I-4 | und | (2-53) IKA 2002 |

Weiterhin erhält man die in Tabelle 5 aufgeführten Kombinationen, wobei jede Kombination für sich eine bevorzugte erfindungsgemäße Ausführungsform darstellt.

**Tabelle 5**

| Wirkstoffkombination enthaltend | | | |
|---|---|---|---|
| **Nr. Wirkstoffkombination** | **Verbindung der Formel I** | | **Verbindung der Gruppe 2** |
| 5-1 | I-5 | und | (2-1) Spinosad |
| 5-3 | I-5 | und | (2-3) Abamectin |
| 5-4 | I-5 | und | (2-4) Emamectin-Benzoat |
| 5-5 | I-5 | und | (2-5) Milbemectin |
| 5-8 | I-5 | und | (2-8) Indoxacarb |
| 5-9 | I-5 | und | (2-9) Fipronil |
| 5-10 | I-5 | und | (2-10) Ethiprole |
| 5-14 | I-5 | und | (2-14) Chlorfenapyr |
| 5-15 | I-5 | und | (2-15) Diafenthiuron |
| 5-19 | I-5 | und | (2-19) Tebufenpyrad |
| 5-20 | I-5 | und | (2-20) Fenpyroximate |
| 5-21 | I-5 | und | (2-21) Cyenopyrafen |
| 5-29 | I-5 | und | (2-29) Cyflumetofen |
| 5-30 | I-5 | und | (2-30) Amitraz |
| 5-31 | I-5 | und | (2-31) Cyromazine |

(fortgesetzt)

| Wirkstoffkombination enthaltend | | | |
|---|---|---|---|
| Nr. Wirkstoffkombination | Verbindung der Formel I | | Verbindung der Gruppe 2 |
| 5-40 | I-5 | und | (2-40) Pyridaben |
| 5-42 | I-5 | und | (2-42) Flonicamid |
| 5-45 | I-5 | und | (2-45) Pymetrozine |
| 5-46 | I-5 | und | (2-46) Pyrifluquinazon |
| 5-47 | I-5 | und | (2-47) Rynaxapyr |
| 5-49 | I-5 | und | (2-49) Metaflumizone |
| 5-53 | I-5 | und | (2-53) IKA 2002 |

Weiterhin erhält man die in Tabelle 6 aufgeführten Kombinationen, wobei jede Kombination für sich eine bevorzugte erfindungsgemäße Ausführungsform darstellt.

<u>**Tabelle 6**</u>

| Wirkstoffkombination enthaltend | | | |
|---|---|---|---|
| Nr. Wirkstoffkombination | Verbindung der Formel I | | Verbindung der Gruppe 2 |
| 6-1 | I-6 | und | (2-1) Spinosad |
| 6-3 | I-6 | und | (2-3) Abamectin |
| 6-4 | I-6 | und | (2-4) Emamectin-Benzoat |
| 6-5 | I-6 | und | (2-5) Milbemectin |
| 6-8 | I-6 | und | (2-8)Indoxacarb |
| 6-9 | I-6 | und | (2-9) Fipronil |
| 6-10 | I-6 | und | (2-10) Ethiprole |
| 6-14 | I-6 | und | (2-14) Chlorfenapyr |
| 6-15 | 1-6 | und | (2-15) Diafenthiuron |
| 6-19 | I-6 | und | (2-19) Tebufenpyrad |
| 6-20 | I-6 | und | (2-20) Fenpyroximate |
| 6-21 | I-6 | und | (2-21) Cyenopyrafen |
| 6-29 | I-6 | und | (2-29) Cyflumetofen |
| 6-30 | I-6 | und | (2-30) Amitraz |
| 6-31 | I-6 | und | (2-31) Cyromazine |
| 6-40 | I-6 | und | (2-40) Pyridaben |
| 6-42 | I-6 | und | (2-42) Flonicamid |
| 6-45 | I-6 | und | (2-45) Pymetrozine |
| 6-46 | I-6 | und | (2-46) Pyrifluquinazon |
| 6-47 | I-6 | und | (2-47) Rynaxapyr |
| 6-49 | I-6 | und | (2-49) Metaflumizone |
| 6-53 | I-6 | und | (2-53) IKA 2002 |

Wenn die Wirkstoffe in den erfindungsgemäßen Wirkstoffkombinationen in bestimmten Gewichtsverhältnissen vorhanden sind, zeigt sich der synergistische Effekt besonders deutlich. Jedoch können die Gewichtsverhältnisse der

Wirkstoffe in den Wirkstoffkombinationen in einem relativ großen Bereich variiert werden. Im allgemeinen enthalten die erfindungsgemäßen Kombinationen einen Wirkstoff der Formel (I) und einen der oben einzeln aufgeführten Wirkstoffe (2-1) bis (2-53) in folgenden bevorzugten und besonders bevorzugten Mischungsverhältnissen:

| | |
|---|---|
| Bevorzugtes Mischungsverhältnis: | 125:1 bis 1:125 |
| Besonders bevorzugtes Mischungsverhältnis: | 25:1 bis 1:25 |

Die Mischungsverhältnisse basieren auf Gewichtsverhältnissen. Das Verhältnis ist zu verstehen als Verbindung der Formel (I) : Wirkstoff (2-1) bis (2-53). Weitere Mischungsverhältnisse der Verbindung der Formel (I) zu einem der oben einzeln aufgeführten Wirkstoffe (2-1) bis (2-53) sind im Folgenden angegeben und nach steigender Präferenz der Mischungsverhältnisse sortiert: 95:1 bis 1:95, 95:1 bis 1:90, 95:1 bis 1:85, 95:1 bis 1:80, 95:1 bis 1:75, 95:1 bis 1:70, 95:1 bis 1:65, 95:1 bis 1:60, 95:1 bis 1:55, 95:1 bis 1:50, 95:1 bis 1:45, 95:1 bis 1:40, 95:1 bis 1:35, 95:1 bis 1:30, 95:1 bis 1:25, 95:1 bis 1:20, 95:1 bis 1:15, 95:1 bis 1:10, 95:1 bis 1:5, 95:1 bis 1:4, 95:1 bis 1:3, 95:1 bis 1:2, 90:1 bis 1:90, 90:1 bis 1:95, 90:1 bis 1:85, 90:1 bis 1:80, 90:1 bis 1:75, 90:1 bis 1:70, 90:1 bis 1:65, 90:1 bis 1:60, 90:1 bis 1:55, 90:1 bis 1:50, 90:1 bis 1:45, 90:1 bis 1:40, 90:1 bis 1:35, 90:1 bis 1:30, 90:1 bis 1:25, 90:1 bis 1:20, 90:1 bis 1:15, 90:1 bis 1:10, 90:1 bis 1:5, 90:1 bis 1:4, 90:1 bis 1:3, 90:1 bis 1:2, 85:1 bis 1:85, 85:1 bis 1:95, 85:1 bis 1:90, 85:1 bis 1:80, 85: 1 bis 1:75, 85:1 bis 1:70, 85:1 bis 1:65, 85:1 bis 1:60, 85:1 bis 1:55, 85:1 bis 1:50, 85:1 bis 1:45, 85:1 bis 1:40, 85:1 bis 1:35, 85:1 bis 1:30, 85:1 bis 1:25, 85:1 bis 1:20, 85:1 bis 1:15, 85:1 bis 1:10, 85:1 bis 1:5, 85:1 bis 1:4, 85:1 bis 1:3, 85: 1 bis 1:2, 80:1 bis 1:80, 80:1 bis 1:95, 80:1 bis 1:90, 80:1 bis 1:85, 80:1 bis 1:75, 80:1 bis 1:70, 80:1 bis 1:65, 80:1 bis 1:60, 80:1 bis 1:55, 80:1 bis 1:50, 80:1 bis 1:45, 80:1 bis 1:40, 80:1 bis 1:35, 80:1 bis 1:30, 80:1 bis 1:25, 80:1 bis 1:20, 80:1 bis 1:15, 80:1 bis 1:10, 80:1 bis 1:5, 80:1 bis 1:4, 80:1 bis 1:3, 80:1 bis 1:2, 75:1 bis 1:75, 75:1 bis 1:95, 75:1 bis 1:90, 75:1 bis 1:85, 75:1 bis 1:80, 75:1 bis 1:70, 75:1 bis 1:65, 75:1 bis 1:60, 75:1 bis 1:55, 75:1 bis 1:50, 75:1 bis 1:45, 75:1 bis 1:40, 75:1 bis 1:35, 75:1 bis 1:30, 75:1 bis 1:25, 75:1 bis 1:20, 75:1 bis 1:15, 75:1 bis 1:10, 75:1 bis 1:5, 75:1 bis 1:4, 75:1 bis 1:3, 75:1 bis 1:2, 70:1 bis 1:70, 70:1 bis 1:95, 70:1 bis 1:90, 70:1 bis 1:85, 70:1 bis 1:80, 70:1 bis 1:75, 70:1 bis 1:65, 70:1 bis 1:60, 70:1 bis 1:55, 70:1 bis 1:50, 70:1 bis 1:45, 70:1 bis 1:40, 70:1 bis 1:35, 70:1 bis 1:30, 70:1 bis 1:25, 70:1 bis 1:20, 70:1 bis 1:15, 70:1 bis 1:10, 70:1 bis 1:5, 70:1 bis 1:4, 70:1 bis 1:3, 70:1 bis 1:2, 65:1 bis 1:65, 65:1 bis 1:95, 65:1 bis 1:90, 65:1 bis 1:85, 65:1 bis 1:80, 65:1 bis 1:75, 65:1 bis 1:70, 65:1 bis 1:60, 65:1 bis 1:55, 65:1 bis 1:50, 65:1 bis 1:45, 65:1 bis 1:40, 65:1 bis 1:35, 65:1 bis 1:30, 65:1 bis 1:25, 65:1 bis 1:20, 65:1 bis 1:15, 65:1 bis 1:10, 65:1 bis 1:5, 65:1 bis 1:4, 65:1 bis 1:3, 65:1 bis 1:2, 60:1 bis 1:60, 60:1 bis 1:95, 60:1 bis 1:90, 60:1 bis 1:85, 60: 1 bis 1:80, 60:1 bis 1:75, 60:1 bis 1:70, 60:1 bis 1:65, 60:1 bis 1:55, 60:1 bis 1:50, 60:1 bis 1:45, 60:1 bis 1:40, 60:1 bis 1:35, 60:1 bis 1:30, 60:1 bis 1:25, 60:1 bis 1:20, 60:1 bis 1:15, 60:1 bis 1:10, 60:1 bis 1:5, 60:1 bis 1:4, 60:1 bis 1:3, 60: 1 bis 1:2, 55:1 bis 1:55, 55:1 bis 1:95, 55:1 bis 1:90, 55:1 bis 1:85, 55:1 bis 1:80, 55:1 bis 1:75, 55:1 bis 1:70, 55:1 bis 1:65, 55:1 bis 1:60, 55:1 bis 1:50, 55:1 bis 1:45, 55:1 bis 1:40, 55:1 bis 1:35, 55:1 bis 1:30, 55:1 bis 1:25, 55:1 bis 1:20, 55:1 bis 1:15, 55:1 bis 1:10, 55:1 bis 1:5, 55:1 bis 1:4, 55:1 bis 1:3, 55:1 bis 1:2, 50:1 bis 1:95, 50:1 bis 1:90, 50:1 bis 1:85, 50:1 bis 1:80, 50:1 bis 1:75, 50:1 bis 1:70, 50:1 bis 1:65, 50:1 bis 1:60, 50:1 bis 1:55, 50:1 bis 1:45, 50:1 bis 1:40, 50:1 bis 1:35, 50:1 bis 1:30, 50:1 bis 1:25, 50:1 bis 1:20, 50:1 bis 1:15, 50:1 bis 1:10, 50:1 bis 1:5, 50:1 bis 1:4, 50:1 bis 1:3, 50:1 bis 1:2, 45:1 bis 1:45, 45:1 bis 1:95, 45:1 bis 1:90, 45:1 bis 1:85, 45:1 bis 1:80, 45:1 bis 1:75, 45:1 bis 1:70, 45:1 bis 1:65, 45:1 bis 1:60, 45:1 bis 1:55, 45:1 bis 1:50, 45:1 bis 1:40, 45:1 bis 1:35, 45:1 bis 1:30, 45:1 bis 1:25, 45:1 bis 1:20, 45:1 bis 1:15, 45:1 bis 1:10, 45:1 bis 1:5, 45:1 bis 1:4, 45:1 bis 1:3, 45:1 bis 1:2, 40:1 bis 1:40, 40:1 bis 1:95, 40:1 bis 1:90, 40:1 bis 1:85, 40:1 bis 1:80, 40:1 bis 1:75, 40:1 bis 1:70, 40:1 bis 1:65, 40:1 bis 1:60, 40:1 bis 1:55, 40:1 bis 1:50, 40:1 bis 1:45, 40:1 bis 1:35, 40:1 bis 1:30, 40:1 bis 1:25, 40:1 bis 1:20, 40:1 bis 1:15, 40:1 bis 1:10, 40:1 bis 1:5, 40:1 bis 1:4, 40:1 bis 1:3, 40:1 bis 1:2, 35:1 bis 1:35, 35:1 bis 1:95, 35:1 bis 1:90, 35:1 bis 1:85, 35:1 bis 1:80, 35: 1 bis 1:75, 35:1 bis 1:70, 35:1 bis 1:65, 35:1 bis 1:60, 35:1 bis 1:55, 35:1 bis 1:50, 35:1 bis 1:45, 35:1 bis 1:40, 35:1 bis 1:30, 35:1 bis 1:25, 35:1 bis 1:20, 35:1 bis 1:15, 35:1 bis 1:10, 35:1 bis 1:5, 35:1 bis 1:4, 35:1 bis 1:3, 35:1 bis 1:2, 30: 1 bis 1:30, 30:1 bis 1:95, 30:1 bis 1:90, 30:1 bis 1:85, 30:1 bis 1:80, 30:1 bis 1:75, 30:1 bis 1:70, 30:1 bis 1:65, 30:1 bis 1:60, 30:1 bis 1:55, 30:1 bis 1:50, 30:1 bis 1:45, 30:1 bis 1:40, 30:1 bis 1:35, 30:1 bis 1:25, 30:1 bis 1:20, 30:1 bis 1:15, 30:1 bis 1:10, 30:1 bis 1:5, 30:1 bis 1:4, 30:1 bis 1:3, 30:1 bis 1:2, 25:1 bis 1:25, 25:1 bis 1:95, 25:1 bis 1:90, 25:1 bis 1:85, 25:1 bis 1:80, 25:1 bis 1:75, 25:1 bis 1:70, 25:1 bis 1:65, 25:1 bis 1:60, 25:1 bis 1:55, 25:1 bis 1:50, 25:1 bis 1:45, 25:1 bis 1:40, 25:1 bis 1:35, 25:1 bis 1:30, 25:1 bis 1:20, 25:1 bis 1:15, 25:1 bis 1:10, 25:1 bis 1:5, 25:1 bis 1:4, 25:1 bis 1:3, 25:1 bis 1:2, 20:1 bis 1:95, 20:1 bis 1:90, 20:1 bis 1:85, 20:1 bis 1:80, 20:1 bis 1:75, 20:1 bis 1:70, 20:1 bis 1:65, 20:1 bis 1:60, 20:1 bis 1:55, 20:1 bis 1:50, 20:1 bis 1:45, 20:1 bis 1:40, 20:1 bis 1:35, 20:1 bis 1:30, 20:1 bis 1:25, 20:1 bis 1:15, 20:1 bis 1:10, 20:1 bis 1:5, 20:1 bis 1:4, 20:1 bis 1:3, 20:1 bis 1:2, 15:1 bis 1:15, 15:1 bis 1:95, 15:1 bis 1:90, 15:1 bis 1:85, 15:1 bis 1:80, 15:1 bis 1:75, 15:1 bis 1:70, 15:1 bis 1:65, 15:1 bis 1:60, 15:1 bis 1:55, 15:1 bis 1:50, 15:1 bis 1:45, 15:1 bis 1:40, 15:1 bis 1:35, 15:1 bis 1:30, 15:1 bis 1:25, 15:1 bis 1:20, 15:1 bis 1:10, 15:1 bis 1:5, 15:1 bis 1: 4, 15:1 bis 1:3, 15:1 bis 1:2, 10:1 bis 1:10, 10:1 bis 1:95, 10:1 bis 1:90, 10:1 bis 1:85, 10:1 bis 1:80, 10:1 bis 1:75, 10:1 bis 1:70, 10:1 bis 1:65, 10:1 bis 1:60, 10:1 bis 1:55, 10:1 bis 1:50, 10:1 bis 1:45, 10:1 bis 1:40, 10:1 bis 1:35, 10:1 bis 1:30, 10:1 bis 1:25, 10:1 bis 1:20, 10:1 bis 1:15, 10:1 bis 1:5, 10:1 bis 1:4, 10:1 bis 1:3, 10:1 bis 1:2, 5:1 bis 1:5, 5:1 bis

1:95, 5:1 bis 1:90, 5:1 bis 1:85, 5:1 bis 1:80, 5:1 bis 1:75, 5:1 bis 1:70, 5:1 bis 1:65, 5:1 bis 1:60, 5:1 bis 1:55, 5:1 bis 1:50, 5:1 bis 1:45, 5:1 bis 1:40, 5:1 bis 1:35, 5:1 bis 1:30, 5:1 bis 1:25, 5:1 bis 1:20, 5:1 bis 1:15, 5:1 bis 1:10, 5:1 bis 1:4, 5:1 bis 1:3, 5:1 bis 1:2, 4:1 bis 1:4, 4:1 bis 1:95, 4:1 bis 1:90, 4:1 bis 1:85, 4:1 bis 1:80, 4:1 bis 1:75, 4:1 bis 1:70, 4:1 bis 1:65, 4:1 bis 1:60, 4:1 bis 1:55, 4:1 bis 1:50, 4:1 bis 1:45, 4:1 bis 1:40, 4:1 bis 1:35, 4:1 bis 1:30, 4:1 bis 1:25, 4:1 bis 1:20, 4:1 bis 1:15, 4:1 bis 1:10, 4:1 bis 1: 5, 4:1 bis 1:3, 4:1 bis 1:2, 3:1 bis 1:3, 3:1 bis 1:95, 3:1 bis 1:90, 3:1 bis 1:85, 3:1 bis 1:80, 3:1 bis 1:75, 3:1 bis 1:70, 3:1 bis 1:65, 3:1 bis 1:60, 3:1 bis 1:55, 3:1 bis 1:50, 3:1 bis 1:45, 3:1 bis 1:40, 3:1 bis 1:35, 3:1 bis 1:30, 3:1 bis 1:25, 3:1 bis 1:20, 3:1 bis 1:15, 3:1 bis 1:10, 3:1 bis 1: 5, 3:1 bis 1:4, 3:1 bis 1:2, 2:1 bis 1:2, 2:1 bis 1:95, 2:1 bis 1:90, 2:1 bis 1:85, 2:1 bis 1:80, 2:1 bis 1:75, 2:1 bis 1:70, 2:1 bis 1:65, 2:1 bis 1:60, 2:1 bis 1:55, 2:1 bis 1:50, 2:1 bis 1:45, 2:1 bis 1:40, 2:1 bis 1:35, 2:1 bis 1:30, 2:1 bis 1:25, 2:1 bis 1:20, 2:1 bis 1:15, 2:1 bis 1:10, 2:1 bis 1: 5, 2:1 bis 1:4, 2:1 bis 1:3.

Die Verbindungen der Formel (I) oder die Wirkstoffe aus der Klasse der Makrolide, der Carboxylate oder anderer Klassen mit wenigstens einem basischen Zentrum sind dazu in der Lage, beispielsweise Säureadditionssalze zu bilden, z.B. mit starken anorganischen Säuren wie Mineralsäuren, z.B. Perchlorsäure, Schwefelsäure, Salpetersäure, salpetriger Säure, einer Phosphorsäure oder einer Halogenwasserstoffsäure, mit starken organischen Carbonsäuren wie unsubstituierten oder substituierten, z.B. halogensubstituierten, $C_1$-$C_4$-Alkancarbonsäuren, z.B. Essigsäure, gesättigten oder ungesättigten Dicarbonsäuren, z.B. Oxalsäure, Malonsäure, Bernsteinsäure, Maleinsäure, Fumarsäure und Phthalsäure, Hydroxycarbonsäuren, z.B. Ascorbinsäure, Milchsäure, Äpfelsäure, Weinsäure und Citronensäure, oder Benzoesäure, oder mit organischen Sulfonsäuren wie unsubstituierten oder substituierten, z.B. halogensubstituierten, $C_1$-$C_4$-Alkan- oder Arylsulfonsäuren, z.B. Methan- oder p-Toluolsulfonsäure. Die Verbindungen der Formel (I) oder die Wirkstoffe aus der Klasse der Makrolide, der Carboxylate oder anderer Klassen mit wenigstens einer sauren Gruppe sind dazu in der Lage, zum Beispiel Salze mit Basen zu bilden, z.B. Metallsalze wie Alkali- oder Erdalkalisalze, z.B. Natrium-, Kalium- oder Magnesiumsalze, oder Salze mit Ammoniak oder einem organischen Amin wie Morpholin, Piperidin, Pyrrolidin, einem niederen Mono-, Di- oder Trialkylamin, z.B. Ethyl-, Diethyl-, Triethyl- oder Dimethylpropylamin, oder einem niederen Mono-, Di- oder Trihydroxyalkylamin, z.B. Mono-, Di- oder Triethanolamin. Darüber hinaus können gegebenenfalls entsprechende innere Salze gebildet werden. Im Rahmen der Erfindung sind agrochemisch vorteilhafte Salze bevorzugt. Angesichts der engen Beziehung zwischen den Verbindungen der Formel (I) oder den Wirkstoffen aus der Klasse der Makrolide, der Carboxylate oder anderer Klassen in freier Form und in Form ihrer Salze sollte oben und im folgenden jeder Verweis auf die freien Verbindungen der Formel (I) oder freie Wirkstoffe aus der Klasse der Makrolide, der Carboxylate oder anderer Klassen oder auf ihre Salze so verstanden werden, dass auch die entsprechenden Salze bzw. die freien Verbindungen der Formel (I) oder die freien Wirkstoffe aus der Klasse der Makrolide, der Carboxylate oder anderer Klassen eingeschlossen sind, wenn dies angebracht und zweckmäßig ist. Dies trifft entsprechend auch auf Tautomere der Verbindungen der Formel (I) bzw. der Wirkstoffe aus der Klasse der Makrolide, der Carboxylate oder anderer Klassen und auf ihre Salze zu.

Im Rahmen der vorliegenden Erfindung steht der Begriff "Wirkstoffkombination" für verschiedene Kombinationen von Verbindungen der Formel (I-4), (I-5), oder (I-6) und einer der oben, einzeln aufgeführten Wirkstoften (2-1) bis (2-53), z.B. in Form einer einzelnen Fertigmischung ("Ready-Mix"), in einer kombinierten Spraymischung, die zusammengesetzt ist aus getrennten Formulierungen der einzelnen Wirkstoffe, z.B. einer Tankmischung ("Tank-Mix") oder in einer kombinierten Verwendung der einzelnen Wirkstoffe, wenn diese sequentiell appliziert werden, z.B. nacheinander innerhalb eines angemessen kurzen Zeitraums, z.B. wenigen Stunden oder Tagen. Gemäß einer bevorzugten Ausführungsform ist die Reihenfolge der Applikation der Verbindungen der Formel (I-4), (I-5) oder (I-6) und der Wirkstoff (2-1) bis (2-53), für die Ausführung der vorliegenden Erfindung nicht entscheidend.

Beim Einsatz der erfindungsgemäßen Wirkstoffkombinationen als Insektizide und Akarizide können die Aufwandmengen je nach Applikationsart innerhalb eines größeren Bereiches variiert werden. Die Aufwandmenge der erfindungsgemäßen Wirkstoffkombinationen beträgt bei der Behandlung von Pflanzenteilen, z.B. Blättern von 0,1 bis 10.000 g/ha, bevorzugt von 10 bis 1.000 g/ha, besonders bevorzugt von 50 bis 300g/ha (bei Anwendung durch Gießen oder Tropfen kann die Aufwandmenge sogar verringert werden, vor allem wenn inerte Substrate wie Steinwolle oder Perlit verwendet werden); bei der Saatgutbehandlung von 2 bis 200 g pro 100 kg Saatgut, bevorzugt von 3 bis 150 g pro 100 kg Saatgut, besonders bevorzugt von 2,5 bis 25 g pro 100 kg Saatgut, ganz besonders bevorzugt von 2,5 bis 12,5 g pro 100 kg Saatgut; bei der Bodenbehandlung von 0,1 bis 10.000 g/ha, bevorzugt von 1 bis 5.000 g/ha.

Die erfindungsgemäßen Wirkstoffkombinationen können eingesetzt werden, um Pflanzen innerhalb eines gewissen Zeitraumes nach der Behandlung gegen den Befall durch die genannten tierischen Schädlinge zu schützen. Der Zeitraum, innerhalb dessen Schutz herbeigeführt wird, erstreckt sich im Allgemeinen auf 1 bis 28 Tage, bevorzugt auf 1 bis 14 Tage, besonders bevorzugt auf 1 bis 10 Tage, ganz besonders bevorzugt auf 1 bis 7 Tage nach der Behandlung der Pflanzen mit den Wirkstoffen bzw. auf bis zu 200 Tage nach einer Saatgutbehandlung.

Die erfindungsgemäßen Wirkstoffkombinationen eignen sich bei guter Pflanzenverträglichkeit, günstiger Warmblütertoxizität und guter Umweltverträglichkeit zum Schutz von Pflanzen und Pflanzenorganen, zur Steigerung der Ernteerträge, Verbesserung der Qualität des Erntegutes und zur Bekämpfung von tierischen Schädlingen, insbesondere Insekten, Spinnentieren, Helminthen, Nematoden und Mollusken, die in der Landwirtschaft, im Gartenbau, bei der Tierzucht, in Forsten, in Gärten und Freizeiteinrichtungen, im Vorrats- und Materialschutz sowie auf dem Hygienesektor vorkommen. Sie können vorzugsweise als Pflanzenschutzmittel eingesetzt werden. Sie sind gegen normal sensible und resistente Arten sowie gegen alle oder einzelne Entwicklungsstadien wirksam. Zu den oben erwähnten Schädlingen gehören:

Aus der Ordnung der Anoplura (Phthiraptera) z.B. Damalinia spp., Haematopinus spp., Linognathus spp., Pediculus spp., Trichodectes spp.

Aus der Klasse der Arachnida z.B. Acarus siro, Aceria sheldoni, Aculops spp., Aculus spp., Amblyomma spp., Argas spp., Boophilus spp., Brevipalpus spp., Bryobia praetiosa, Chorioptes spp., Dermanyssus gallinae, Eotetranychus spp., Epitrimerus pyri, Eutetranychus spp., Eriophyes spp., Hemitarsonemus spp., Hyalomma spp., Ixodes spp., Latrodectus mactans, Metatetranychus spp., Oligonychus spp., Ornithodoros spp., Panonychus spp., Phyllocoptruta oleivora, Polyphagotarsonemus latus, Psoroptes spp., Rhipicephalus spp., Rhizoglyphus spp., Sarcoptes spp., Scorpio maurus, Stenotarsonemus spp., Tarsonemus spp., Tetranychus spp., Vasates lycopersici.

Aus der Klasse der Bivalva z.B. Dreissena spp.

Aus der Ordnung der Chilopoda z.B. Geophilus spp., Scutigera spp.

Aus der Ordnung der Coleoptera z.B. Acanthoscelides obtectus, Adoretus spp., Agelastica alni, Agriotes spp., Amphimallon solstitialis, Anobium punctatum, Anoplophora spp., Anthonomus spp., Anthrenus spp., Apogonia spp., Atomaria spp., Attagenus spp., Bruchidius obtectus, Bruchus spp., Ceuthorhynchus spp., Cleonus mendicus, Conoderus spp., Cosmopolites spp., Costelytra zealandica, Curculio spp., Cryptorhynchus lapathi, Dermestes spp., Diabrotica spp., Epilachna spp., Faustinus cubae, Gibbium psylloides, Heteronychus arator, Hylamorpha elegans, Hylotrupes bajulus, Hypera postica, Hypothenemus spp., Lachnosterna consanguinea, Leptinotarsa decemlineata, Lissorhoptrus oryzophilus, Lixus spp., Lyctus spp., Meligethes aeneus, Melolontha melolontha, Migdolus spp., Monochamus spp., Naupactus xanthographus, Niptus hololeucus, Oryctes rhinoceros, Oryzaephilus surinamensis, Otiorrhynchus sulcatus, Oxycetonia jucunda, Phaedon cochleariae, Phyllophaga spp., Popillia japonica, Premnotrypes spp., Psylliodes chrysocephala, Ptinus spp., Rhizobius ventralis, Rhizopertha dominica, Sitophilus spp., Sphenophorus spp., Sternechus spp., Symphyletes spp., Tenebrio molitor, Tribolium spp., Trogoderma spp., Tychius spp., Xylotrechus spp., Zabrus spp.

Aus der Ordnung der Collembola z.B. Onychiurus armatus.

Aus der Ordnung der Dermaptera z.B. Forficula auricularia.

Aus der Ordnung der Diplopoda z.B. Blaniulus guttulatus.

Aus der Ordnung der Diptera z.B. Aedes spp., Anopheles spp., Bibio hortulanus, Calliphora erythrocephala, Ceratitis capitata, Chrysomyia spp., Cochliomyia spp., Cordylobia anthropophaga, Culex spp., Cuterebra spp., Dacus oleae, Dermatobia hominis, Drosophila spp., Fannia spp., Gastrophilus spp., Hylemyia spp., Hyppobosca spp., Hypoderma spp., Liriomyza spp.. Lucilia spp., Musca spp., Nezara spp., Oestrus spp., Oscinella frit, Pegomyia hyoscyami, Phorbia spp., Stomoxys spp., Tabanus spp., Tannia spp., Tipula paludosa, Wohlfahrtia spp.

Aus der Klasse der Gastropoda z.B. Arion spp., Biomphalaria spp., Bulinus spp., Deroceras spp., Galba spp., Lymnaea spp., Oncomelania spp., Succinea spp.

Aus der Klasse der Helminthen z.B. Ancylostoma duodenale, Ancylostoma ceylanicum, Acylostoma braziliensis, Ancylostoma spp., Ascaris lubricoides, Ascaris spp., Brugia malayi, Brugia timori, Bunostomum spp., Chabertia spp., Clonorchis spp., Cooperia spp., Dicrocoelium spp, Dictyocaulus filaria, Diphyllobothrium latum, Dracunculus medinensis, Echinococcus granulosus, Echinococcus multilocularis, Enterobius vermicularis, Faciola spp., Haemonchus spp., Heterakis spp., Hymenolepis nana, Hyostrongulus spp., Loa Loa, Nematodirus spp., Oesophagostomum spp., Opisthorchis spp., Onchocerca volvulus, Ostertagia spp., Paragonimus spp., Schistosomen spp, Strongyloides fuelleborni, Strongyloides stercoralis, Stronyloides spp., Taenia saginata, Taenia solium, Trichinella spiralis, Trichinella nativa, Trichinella britovi, Trichinella nelsoni, Trichinella pseudopsiralis, Trichostrongulus spp., Trichuris trichuria, Wuchereria bancrofti.

Weiterhin lassen sich Protozoen, wie Eimeria, bekämpfen.

Aus der Ordnung der Heteroptera z.B. Anasa tristis, Antestiopsis spp., Blissus spp., Calocoris spp., Campylomma livida, Cavelerius spp., Cimex spp., Creontiades dilutus, Dasynus piperis, Dichelops furcatus, Diconocoris hewetti, Dysdercus spp., Euschistus spp., Eurygaster spp., Heliopeltis spp., Horcias nobilellus, Leptocorisa spp., Leptoglossus phyllopus, Lygus spp., Macropes excavatus, Miridae, Nezara spp., Oebalus spp., Pentomidae, Piesma quadrata, Piezodorus spp., Psallus seriatus, Pseudacysta persea, Rhodnius spp., Sahlbergella singularis, Scotinophora spp., Stephanitis nashi, Tibraca spp., Triatoma spp.

Aus der Ordnung der Homoptera z.B. Acyrthosipon spp., Aeneolamia spp., Agonoscena spp., A-leurodes spp., Aleurolobus barodensis, Aleurothrixus spp., Amrasca spp., Anuraphis cardui, Aonidiella spp., Aphanostigma piri, Aphis spp., Arboridia apicalis, Aspidiella spp., Aspidiotus spp., Atanus spp., Aulacorthum solani, Bemisia spp., Brachycaudus helichrysii, Brachycolus spp., Brevicoryne brassicae, Calligypona marginata, Carneocephala fulgida, Ceratovacuna lanigera, Cercopidae, Ceroplastes spp., Chaetosiphon fragaefolii, Chionaspis tegalensis, Chlorita onukii, Chromaphis juglandicola, Chrysomphalus ficus, Cicadulina mbila, Coccomytilus halli, Coccus spp., Cryptomyzus ribis, Dalbulus spp., Dialeurodes spp., Diaphorina spp., Diaspis spp., Doralis spp., Drosicha spp., Dysaphis spp., Dysmicoccus spp., Empoasca spp., Eriosoma spp., Erythroneura spp., Euscelis bilobatus, Geococcus coffeae, Homalodisca coagulata, Hyalopterus arundinis, Icerya spp., Idiocerus spp., Idioscopus spp., Laodelphax striatellus, Lecanium spp., Lepidosaphes spp., Lipaphis erysimi, Macrosiphum spp., Mahanarva fimbriolata, Melanaphis sacchari, Metcalfiella spp., Metopolophium dirhodum, Monellia costalis, Monelliopsis pecanis, Myzus spp., Nasonovia ribisnigri, Nephotettix spp., Nilaparvata lugens, Oncometopia spp., Orthezia praelonga, Parabemisia myricae, Paratrioza spp., Parlatoria spp., Pemphigus spp., Peregrinus maidis, Phenacoccus spp., Phloeomyzus passerinii, Phorodon humuli, Phylloxera spp., Pinnaspis aspidistrae, Planococcus spp., Protopulvinaria pyriformis, Pseudaulacaspis pentagona, Pseudococcus spp., Psylla spp., Pteromalus spp., Pyrilla spp., Quadraspidiotus spp., Quesada gigas, Rastrococcus spp., Rhopalosiphum spp., Saissetia spp., Scaphoides titanus, Schizaphis graminum, Selenaspidus articulatus, Sogata spp., Sogatella furcifera, Sogatodes spp., Stictocephala festina, Tenalaphara malayensis, Tinocallis caryaefoliae, Tomaspis spp., Toxoptera spp., Trialeurodes vaporariorum, Trioza spp., Typhlocyba spp., Unaspis spp., Viteus vitifolii.

Aus der Ordnung der Hymenoptera z.B. Diprion spp., Hoplocampa spp., Lasius spp., Monomorium pharaonis, Vespa spp.

Aus der Ordnung der Isopoda z.B. Armadillidium vulgare, Oniscus asellus, Porcellio scaber.

Aus der Ordnung der Isoptera z.B. Reticulitermes spp., Odontotermes spp.

Aus der Ordnung der Lepidoptera z.B. Acronicta major, Aedia leucomelas, Agrotis spp., Alabama argillacea, Anticarsia spp., Barathra brassicae, Bucculatrix thurberiella, Bupalus piniarius, Cacoecia podana, Capua reticulana, Carpocapsa pomonella, Cheimatobia brumata, Chilo spp., Choristoneura fumiferana, Clysia ambiguella, Cnaphalocerus spp., Earias insulana, Ephestia kuehniella, Euproctis chrysorrhoea, Euxoa spp., Feltia spp., Galleria mellonella, Helicoverpa spp., Heliothis spp., Hofmannophila pseudospretella, Homona magnanima, Hyponomeuta padella, Laphygma spp., Lithocolletis blancardella, Lithophane antennata, Loxagrotis albicosta, Lymantria spp., Malacosoma neustria, Mamestra brassicae, Mocis repanda, Mythimna separata, Oria spp., Oulema oryzae, Panolis flammea, Pectinophora gossypiella, Phyllocnistis citrella, Pieris spp., Plutella xylostella, Prodenia spp., Pseudaletia spp., Pseudoplusia includens, Pyrausta nubilalis, Spodoptera spp., Thermesia gemmatalis, Tinea pellionella, Tineola bisselliella, Tortrix viridana, Trichoplusia spp.

Aus der Ordnung der Orthoptera z.B. Acheta domesticus, Blatta orientalis, Blattella germanica, Gryllotalpa spp., Leucophaea maderae, Locusta spp., Melanoplus spp., Periplaneta americana, Schistocerca gregaria.

Aus der Ordnung der Siphonaptera z.B. Ceratophyllus spp., Xenopsylla cheopis.

Aus der Ordnung der Symphyla z.B. Scutigerella immaculata.

Aus der Ordnung der Thysanoptera z.B. Baliothrips biformis, Enneothrips flavens, Frankliniella spp., Heliothrips spp., Hercinothrips femoralis, Kakothrips spp., Rhipiphorothrips cruentatus, Scirtothrips spp., Taeniothrips cardamoni, Thrips spp.

Aus der Ordnung der Thysanura z.B. Lepisma saccharina.

Zu den pflanzenparasitären Nematoden gehören z.B. Anguina spp., Aphelenchoides spp., Belonoaimus spp., Bursaphelenchus spp., Ditylenchus dipsaci, Globodera spp., Heliocotylenchus spp., Heterodera spp., Longidorus spp., Meloidogyne spp., Pratylenchus spp., Radopholus similis, Rotylenchus spp., Trichodorus spp., Tylenchorhynchus spp., Tylenchulus spp., Tylenchulus semipenetrans, Xiphinema spp.

Die erfindungsgemäßen Wirkstoffkombinationen können gegebenenfalls in bestimmten Konzentrationen bzw. Aufwandmengen auch als Herbizide, Safener, Wachstumsregulatoren oder Mittel zur Verbesserung der Pflanzeneigenschaften, oder als Mikrobizide, beispielsweise als Fungizide, Antimykotika, Bakterizide, Virizide (einschließlich Mittel gegen Viroide) oder als Mittel gegen MLO (Mycoplasma-like-organism) und RLO (Rickettsia-like-organism) verwendet werden.

Die Wirkstoffe können in die üblichen Formulierungen überführt werden, wie Lösungen, Emulsionen, Spritzpulver, wasser- und ölbasierte Suspensionen, Pulver, Stäubemittel, Pasten, lösliche Pulver, lösliche Granulate, Streugranulate, Suspensions-Emulsions-Konzentrate, Wirkstoff-imprägnierte Naturstoffe, Wirkstoff-imprägnierte synthetische Stoffe, Düngemittel sowie Feinstverkapselungen in polymeren Stoffen.

Diese Formulierungen werden in bekannter Weise hergestellt, z.B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln. Die Herstellung der Formulierungen erfolgt entweder in geeigneten Anlagen oder auch vor oder während der Anwendung.

Als Hilfsstoffe können solche Stoffe Verwendung finden, die geeignet sind, dem Mittel selbst oder und/oder davon abgeleitete Zubereitungen (z.B. Spritzbrühen, Saatgutbeizen) besondere Eigenschaften zu verleihen, wie bestimmte technische Eigenschaften und/oder auch besondere biologische Eigenschaften. Als typische Hilfsmittel kommen in Frage: Streckmittel, Lösemittel und Trägerstoffe.

Als Streckmittel eignen sich z.B. Wasser, polare und unpolare organische chemische Flüssigkeiten z.B. aus den Klassen der aromatischen und nicht-aromatischen Kohlenwasserstoffe (wie Paraffine, Alkylbenzole, Alkylnaphthaline, Chlorbenzole), der Alkohole und Polyole (die ggf. auch substituiert, verethert und/oder verestert sein können), der Ketone (wie Aceton, Cyclohexanon), Ester (auch Fette und Öle) und (poly-)Ether, der einfachen und substituierten Amine, Amide, Lactame (wie *N*-Alkylpyrrolidone) und Lactone, der Sulfone und Sulfoxide (wie Dimethylsulfoxid).

Im Falle der Benutzung von Wasser als Streckmittel können z.B. auch organische Lösemittel als Hilfslösungsmittel verwendet werden. Als flüssige Lösemittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methylisobutylketon oder Cyclohexanon, stark polare Lösungsmittel, wie Dimethylsulfoxid, sowie Wasser.

Erfindungsgemäß bedeutet Trägerstoff eine natürliche oder synthetische, organische oder anorganische Substanz, welcher fest oder flüssig sein kann, mit welchen die Wirkstoffe zur besseren Anwendbarkeit, insbesondere zum Aufbringen auf Pflanzen oder Pflanzenteile oder Saatgut, gemischt oder verbunden sind. Der feste oder flüssige Trägerstoff ist im Allgemeinen inert und sollte in der Landwirtschaft verwendbar sein.

Als feste oder flüssige Trägerstoffe kommen in Frage:

z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Papier, Sägemehl, Kokosnussschalen, Maiskolben und Tabakstängeln; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylaryl-polyglykolether, Alkylsulfonate, Alkylsulfate, Arylsulfonate sowie Eiweißhydrolysate; als Dispergiermittel kommen in Frage nicht-ionische und/oder ionische Stoffe, z.B. aus den Klassen der Alkohol-POE- und/oder POP-Ether, Säure- und/oder POP- POE-Ester, Alkyl-Aryl- und/oder POP- POE-Ether, Fett- und/oder POP- POE-Addukte, POE- und/oder POP-Polyol Derivate, POE- und/oder POP-Sorbitan- oder Zucker-Addukte, Alkyl- oder Aryl-Sulfate, Sulfonate und Phosphate oder die entsprechenden PO-Ether-Addukte. Ferner geeignete Oligo- oder Polymere, z.B. ausgehend von vinylischen Monomeren, von Acrylsäure, aus EO und/oder PO allein oder in Verbindung mit z.B. (poly-) Alkoholen oder (poly-) Aminen. Ferner können Einsatz finden Lignin und seine Sulfonsäure-Derivate, einfache und modifizierte Cellulosen, aromatische und/oder aliphatische Sulfonsäuren sowie deren Addukte mit Formaldehyd.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Weitere Additive können Duftstoffe, mineralische oder vegetabile gegebenenfalls modifizierte Öle, Wachse und Nährstoffe (auch Spurennährstoffe), wie Salze von Eisen, Mangan, Bor, Kupfer, Kobalt, Molybdän und Zink sein.

Weiterhin enthalten sein können Stabilisatoren wie Kältestabilisatoren, Konservierungsmittel, Oxidationsschutzmittel, Lichtschutzmittel oder andere die chemische und/oder physikalische Stabilität verbessernde Mittel.

Der Wirkstoffgehalt der aus den handelsüblichen Formulierungen bereiteten Anwendungsformen kann in weiten Bereichen variieren. Die Wirkstoffkonzentration der Anwendungsformen liegt im Bereich von 0,00000001 bis 97 Gew.-% Wirkstoff, vorzugsweise im Bereich von 0,0000001 bis 97 Gew.-%, besonders bevorzugt im Bereich von 0,000001 bis 83 Gew.-% oder 0,000001 bis 5 Gew.-% und ganz besonders bevorzugt im Bereich von 0,0001 bis 1 Gew.-%.

Der erfindungsgemäßen Wirkstoffkombinationen können in ihren handelsüblichen Formulierungen sowie in den aus diesen Formulierungen bereiteten Anwendungsformen in Mischung mit anderen Wirkstoffen wie Insektiziden, Lockstoffen, Sterilantien, Bakteriziden, Akariziden, Nematiziden, Fungiziden, wachstumsregulierenden Stoffen, Herbiziden, Safenem, Düngemitteln oder Semiochemicals vorliegen.

Auch eine Mischung mit anderen bekannten Wirkstoffen, wie Herbiziden, Düngemitteln, Wachstumsregulatoren, Safenern, Semiochemicals, oder auch mit Mitteln zur Verbesserung der Pflanzeneigenschaften ist möglich.

Die erfindungsgemäßen Wirkstoffkombinationen können ferner beim Einsatz als Insektizide in ihren handelsüblichen Formulierungen sowie in den aus diesen Formulierungen bereiteten Anwendungsformen in Mischung mit Synergisten vorliegen. Synergisten sind Verbindungen, durch die die Wirkung der Wirkstoffe gesteigert wird, ohne dass der zugesetzte Synergist selbst aktiv wirksam sein muss.

Die erfindungsgemäßen Wirkstoffkombinationen können ferner beim Einsatz als Insektizide in ihren handelsüblichen Formulierungen sowie in den aus diesen Formulierungen bereiteten Anwendungsformen in Mischungen mit Hemmstoffen vorliegen, die einen Abbau des Wirkstoffes nach Anwendung in der Umgebung der Pflanze, auf der Oberfläche von Pflanzenteilen oder in pflanzlichen Geweben vermindern.

Die Anwendung geschieht in einer den Anwendungsformen angepassten üblichen Weise.

Erfindungsgemäß können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie Sproß, Blatt, Blüte und Wurzel verstanden werden, wobei beispielhaft Blätter, Nadeln, Stengel, Stämme, Blüten, Fruchtkörper, Früchte und Saatgut sowie Wurzeln, Knollen und Rhizome aufgeführt werden. Zu den Pflanzenteilen gehört auch Erntegut sowie vegetatives und generatives Vermehrungsmaterial, beispielsweise Früchte, Samen, Stecklinge, Knollen, Rhizome, Ableger, Saatgut, Brutzwiebeln, Absenker und Ausläufer.

Die erfindungsgemäße Behandlung der Pflanzen und Pflanzenteile mit den Wirkstoffkombinationen erfolgt direkt oder durch Einwirkung auf deren Umgebung, Lebensraum oder Lagerraum nach den üblichen Behandlungsmethoden, z.B. durch Tauchen, Sprühen, Verdampfen, Vernebeln, Streuen, Aufstreichen, Injizieren und bei Vermehrungsmaterial, insbesondere bei Saatgut, weiterhin durch ein- oder mehrschichtiges Umhüllen.

Als Pflanzen, welche erfindungsgemäß behandelt werden können, seien folgende erwähnt: Baumwolle, Flachs, Weinrebe, Obst, Gemüse, wie Rosaceae sp. (beispielsweise Kernfrüchte wie Apfel und Birne, aber auch Steinfrüchte wie Aprikosen, Kirschen, Mandeln und Pfirsiche und Beerenfrüchte wie Erdbeeren), Ribesioidae sp., Juglandaceae sp., Betulaceae sp., Anacardiaceae sp., Fagaceae sp., Moraceae sp., Oleaceae sp., Actinidaceae sp., Lauraceae sp., Musaceae sp. (beispielsweise Bananenbäume und - plantagen), Rubiaceae sp. (beispielsweise Kaffee), Theaceae sp., Sterculiceae sp., Rutaceae sp. (beispielsweise Zitronen, Organen und Grapefruit); Solanaceae sp. (beispielsweise Tomaten), Liliaceae sp., Asteraceae sp. (beispielsweise Salat), Umbelliferae sp., Cruciferae sp., Chenopodiaceae sp., Cucurbitaceae sp. (beispielsweise Gurke), Alliaceae sp. (beispielsweise Lauch, Zwiebel), Papilionaceae sp. (beispielsweise Erbsen); Hauptnutzpflanzen, wie Gramineae sp. (beispielsweise Mais, Rasen, Getreide wie Weizen, Roggen, Reis, Gerste, Hafer, Hirse und Triticale), Asteraceae sp. (beispielsweise Sonnenblume), Brassicaceae sp. (beispielsweise Weißkohl, Rotkohl, Brokkoli, Blumenkohl, Rosenkohl, Pak Choi, Kohlrabi, Radieschen sowie Raps, Senf, Meerrettich und Kresse), Fabacae sp. (beispielsweise Bohne, Erdnüsse), Papilionaceae sp. (beispielsweise Sojabohne), Solanaceae sp. (beispielsweise Kartoffeln), Chenopodiaceae sp. (beispielsweise Zuckerrübe, Futterrübe, Mangold, Rote Rübe); Nutzpflanzen und Zierpflanzen in Garten und Wald; sowie jeweils genetisch modifizierte Arten dieser Pflanzen.

Insbesondere eignen sich die erfindungsgemäßen Wirkstoffkombinationen zur Behandlung von Saatgut. Bevorzugt sind dabei die vorstehend als bevorzugt oder besonders bevorzugt genannten erfindungsgemäßen Kombinationen zu nennen. So entsteht ein großer Teil des durch Schädlinge verursachten Schadens an Kulturpflanzen bereits durch den Befall des Saatguts während der Lagerung und nach dem Einbringen des Saatguts in den Boden sowie während und unmittelbar nach der Keimung der Pflanzen. Diese Phase ist besonders kritisch, da die Wurzeln und Sprosse der wachsenden Pflanze besonders empfindlich sind und bereits ein geringer Schaden zum Absterben der ganzen Pflanze führen kann. Es besteht daher ein insbesondere großes Interesse daran, das Saatgut und die keimende Pflanze durch den Einsatz geeigneter Mittel zu schützen.

Die Bekämpfung von Schädlingen durch die Behandlung des Saatguts von Pflanzen ist seit langem bekannt und ist Gegenstand ständiger Verbesserungen. Dennoch ergeben sich bei der Behandlung von Saatgut eine Reihe von Problemen, die nicht immer zufrieden stellend gelöst werden können. So ist es erstrebenswert, Verfahren zum Schutz des Saatguts und der keimenden Pflanze zu entwickeln, die das zusätzliche Ausbringen von Pflanzenschutzmitteln nach der Saat oder nach dem Auflaufen der Pflanzen überflüssig machen. Es ist weiterhin erstrebenswert, die Menge des eingesetzten Wirkstoffs dahingehend zu optimieren, dass das Saatgut und die keimende Pflanze vor dem Befall durch Schädlinge bestmöglich geschützt werden, ohne jedoch die Pflanze selbst durch den eingesetzten Wirkstoff zu schädigen. Insbesondere sollten Verfahren zur Behandlung von Saatgut auch die intrinsischen insektiziden Eigenschaften transgener Pflanzen einbeziehen, um einen optimalen Schutz des Saatguts und auch der keimenden Pflanze bei einem minimalen Aufwand an Pflanzenschutzmitteln zu erreichen.

Die vorliegende Erfindung bezieht sich daher insbesondere auch auf ein Verfahren zum Schutz von Saatgut und keimenden Pflanzen vor dem Befall von Schädlingen, indem das Saatgut mit einer erfindungsgemäßen Wirkstoffkombination behandelt wird. Das erfindungsgemäße Verfahren zum Schutz von Saatgut und keimenden Pflanzen vor dem Befall von Schädlingen umfasst ein Verfahren, in dem das Saatgut zur gleichen Zeit mit einem Wirkstoff der Formel (I-4), (I-5), oder (I,6) und einem der oben einzeln aufgeführten Wirkstoffe (2-1) bis (2-53) behandelt wird. Die Erfindung bezieht sich ebenfalls auf die Verwendung der erfindungsgemäßen Wirkstoffkombinationen zur Behandlung von Saatgut zum Schutz des Saatguts und der daraus entstehenden Pflanze vor Schädlingen.

Bei Saatgut, welches zu unterschiedlichen Zeiten mit einem Wirkstoff der Formel (I-4), (I-5), oder (I-6) und einem der oben einzeln aufgeführten Wirkstoffe (2-1) bis (2-53) behandelt wurde, können die einzelnen Wirkstoffe des erfindungsgemäßen Mittels in unterschiedlichen Schichten auf dem Saatgut enthalten sein. Dabei können die Schichten, die einen Wirkstoff der Formel (I-4), (I-5), oder (I-6) und einen der oben einzeln aufgeführten Wirkstoffe (2-1) bis (2-53) enthalten, gegebenenfalls durch eine Zwischenschicht getrennt sein. Die Erfindung bezieht sich auch auf Saatgut, bei dem ein Wirkstoff der Formel (I) und einer der oben einzeln aufgeführten Wirkstoffe (2-1) bis (2-53) als Bestandteil einer Umhüllung oder als weitere Schicht oder weitere Schichten zusätzlich zu einer Umhüllung aufgebracht sind.

Einer der Vorteile der vorliegenden Erfindung ist es, dass aufgrund der besonderen systemischen Eigenschaften der erfindungsgemäßen Wirkstoffkombinationen die Behandlung des Saatguts mit diesen Wirkstoffkombinationen nicht nur das Saatgut selbst, sondern auch die daraus hervorgehenden Pflanzen nach dem Auflaufen vor Schädlingen schützt. Auf diese Weise kann die unmittelbare Behandlung der Kultur zum Zeitpunkt der Aussaat oder kurz danach entfallen.

Ein weiterer Vorteil besteht in der synergistischen Erhöhung der insektiziden Wirksamkeit der erfindungsgemäßen Wirkstoffkombinationen gegenüber dem insektiziden Einzelwirkstoff, die über die zu erwartende Wirksamkeit der beiden einzeln angewendeten Wirkstoffe hinausgeht. Vorteilhaft ist auch die synergistische Erhöhung der fungiziden Wirksamkeit der erfindungsgemäßen Wirkstoffkombinationen gegenüber dem fungiziden Einzelwirkstoff, die über die zu erwartende Wirksamkeit des einzeln angewendeten Wirkstoffs hinausgeht. Damit wird eine Optimierung der Menge der eingesetzten Wirkstoffe ermöglicht.

Ebenso ist es als vorteilhaft anzusehen, dass die erfindungsgemäßen Wirkstoffkombinationen insbesondere auch bei transgenem Saatgut eingesetzt werden können, wobei die aus diesem Saatgut hervorgehenden Pflanzen zur Expression eines gegen Schädlinge gerichteten Proteins befähigt sind. Durch die Behandlung solchen Saatguts mit den erfindungsgemäßen Wirkstoffkombinationen können bestimmte Schädlinge bereits durch die Expression des z.B. insektiziden Proteins kontrolliert werden, und zusätzlich durch die erfindungsgemäßen Wirkstoffkombinationen vor Schäden bewahrt werden.

Die erfindungsgemäßen Wirkstoffkombinationen eignen sich zum Schutz von Saatgut jeglicher Pflanzensorte wie bereits vorstehend genannt, die in der Landwirtschaft, im Gewächshaus, in Forsten oder im Gartenbau eingesetzt wird. Insbesondere handelt es sich dabei um Saatgut von Mais, Erdnuss, Canola, Raps, Mohn, Soja, Baumwolle, Rübe (z.B. Zuckerrübe und Futterrübe), Reis, Hirse, Weizen, Gerste, Hafer, Roggen, Sonnenblume, Tabak, Kartoffeln oder Gemüse (z.B. Tomaten, Kohlgewächs). Die erfindungsgemäßen Wirkstoffkombinationen eignen sich ebenfalls zur Behandlung des Saatguts von Obstpflanzen und Gemüse wie vorstehend bereits genannt. Besondere Bedeutung kommt der Behandlung des Saatguts von Mais, Soja, Baumwolle, Weizen und Canola oder Raps zu.

Wie vorstehend bereits erwähnt, kommt auch der Behandlung von transgenem Saatgut mit einer erfindungsgemäßen Wirkstoffkombination eine besondere Bedeutung zu. Dabei handelt es sich um das Saatgut von Pflanzen, die in der Regel zumindest ein heterologes Gen enthalten, das die Expression eines Polypeptids mit insbesondere insektiziden Eigenschaften steuert. Die heterologen Gene in transgenem Saatgut können dabei aus Mikroorganismen wie Bacillus, Rhizobium, Pseudomonas, Serratia, Trichoderma, Clavibacter, Glomus oder Gliocladium stammen. Die vorliegende Erfindung eignet sich besonders für die Behandlung von transgenem Saatgut, das zumindest ein heterologes Gen enthält, das aus Bacillus sp. stammt und dessen Genprodukt Wirksamkeit gegen Maiszünsler und/oder Maiswurzel-Bohrer zeigt. Besonders bevorzugt handelt es sich dabei um ein heterologes Gen, das aus Bacillus thuringiensis stammt.

Im Rahmen der vorliegenden Erfindung wird die erfindungsgemäße Wirkstoffkombination alleine oder in einer geeigneten Formulierung auf das Saatgut aufgebracht. Vorzugsweise wird das Saatgut in einem Zustand behandelt, in dem so stabil ist, dass keine Schäden bei der Behandlung auftreten. Im Allgemeinen kann die Behandlung des Saatguts zu jedem Zeitpunkt zwischen der Ernte und der Aussaat erfolgen. Üblicherweise wird Saatgut verwendet, das von der Pflanze getrennt und von Kolben, Schalen, Stängeln, Hülle, Wolle oder Fruchtfleisch befreit wurde.

Im Allgemeinen muss bei der Behandlung des Saatguts darauf geachtet werden, dass die Menge der auf das Saatgut aufgebrachten erfindungsgemäßen Wirkstoffkombination und/oder weiterer Zusatzstoffe so gewählt wird, dass die Keimung des Saatguts nicht beeinträchtigt bzw. die daraus hervorgehende Pflanze nicht geschädigt wird. Dies ist vor allem bei Wirkstoffen zu beachten, die in bestimmten Aufwandmengen phytotoxische Effekte zeigen können.

Die erfindungsgemäßen Mittel können unmittelbar aufgebracht werden, also ohne weitere Komponenten zu enthalten und ohne verdünnt worden zu sein. In der Regel ist es vorzuziehen, die Mittel in Form einer geeigneten Formulierung auf das Saatgut aufzubringen. Geeignete Formulierungen und Verfahren für die Saatgutbehandlung sind dem Fachmann bekannt und werden z.B. in den folgenden Dokumenten beschrieben: US 4,272,417 A, US 4,245,432 A, US 4,808,430 A, US 5,876,739 A, US 2003/0176428 A1, WO 2002/080675 A1, WO 2002/028186 A2.

Die erfindungsgemäß verwendbaren Wirkstoffe können in die üblichen Beizmittel-Formulierungen überführt werden, wie Lösungen, Emulsionen, Suspensionen, Pulver, Schäume, Slurries oder andere Hüllmassen für Saatgut, sowie ULV-Formulierungen.

Diese Formulierungen werden in bekannter Weise hergestellt, indem man die Wirkstoffe mit üblichen Zusatzstoffen vermischt, wie zum Beispiel übliche Streckmittel sowie Lösungs- oder Verdünnungsmittel, Farbstoffe, Netzmittel, Dispergiermittel, Emulgatoren, Entschäumer, Konservierungsmittel, sekundäre Verdickungsmittel, Kleber, Gibberelline und auch Wasser.

Als Farbstoffe, die in den erfindungsgemäß verwendbaren Beizmittel-Formulierungen enthalten sein können, kommen alle für derartige Zwecke üblichen Farbstoffe in Betracht. Dabei sind sowohl in Wasser wenig lösliche Pigmente als auch in Wasser lösliche Farbstoffe verwendbar. Als Beispiele genannt seien die unter den Bezeichnungen Rhodamin B, C.I. Pigment Red 112 und C.I. Solvent Red 1 bekannten Farbstoffe.

Als Netzmittel, die in den erfindungsgemäß verwendbaren Beizmittel-Formulierungen enthalten sein können, kommen alle zur Formulierung von agrochemischen Wirkstoffen üblichen, die Benetzung fördernden Stoffe in Frage.

Vorzugsweise verwendbar sind Alkylnaphthalin-Sulfonate, wie Diisopropyl- oder Diisobutylnaphthalin-Sulfonate.

Als Dispergiermittel und/oder Emulgatoren, die in den erfindungsgemäß verwendbaren Beizmittel-Formulierungen enthalten sein können, kommen alle zur Formulierung von agrochemischen Wirkstoffen üblichen nichtionischen, anionischen und kationischen Dispergiermittel in Betracht. Vorzugsweise verwendbar sind nichtionische oder anionische Dispergiermittel oder Gemische von nichtionischen oder anionischen Dispergiermitteln. Als geeignete nichtionische Dispergiermittel sind insbesondere Ethylenoxid-Propylenoxid Blockpolymere, Alkylphenolpolyglykolether sowie Tristryrylphenolpolyglykolether und deren phosphatierte oder sulfatierte Derivate zu nennen. Geeignete anionische Dispergiermittel sind insbesondere Ligninsulfonate, Polyacrylsäuresalze und Arylsulfonat-Formaldehydkondensate.

Als Entschäumer können in den erfindungsgemäß verwendbaren Beizmittel-Formulierungen alle zur Formulierung von agrochemischen Wirkstoffen üblichen schaumhemmenden Stoffe enthalten sein. Vorzugsweise verwendbar sind Silikonentschäumer und Magnesiumstearat.

Als Konservierungsmittel können in den erfindungsgemäß verwendbaren Beizmittel-Formulierungen alle für derartige Zwecke in agrochemischen Mitteln einsetzbaren Stoffe vorhanden sein. Beispielhaft genannt seien Dichlorophen und Benzylalkoholhemiformal.

Als sekundäre Verdickungsmittel, die in den erfindungsgemäß verwendbaren Beizmittel-Formulierungen enthalten sein können, kommen alle für derartige Zwecke in agrochemischen Mitteln einsetzbaren Stoffe in Frage. Vorzugsweise in Betracht kommen Cellulosederivate, Acrylsäurederivate, Xanthan, modifizierte Tone und hochdisperse Kieselsäure.

Als Kleber, die in den erfindungsgemäß verwendbaren Beizmittel-Formulierungen enthalten sein können, kommen alle üblichen in Beizmitteln einsetzbaren Bindemittel in Frage. Vorzugsweise genannt seien Polyvinylpyrrolidon, Polyvinylacetat, Polyvinylalkohol und Tylose.

Als Gibberelline, die in den erfindungsgemäß verwendbaren Beizmittel-Formulierungen enthalten sein können, kommen vorzugsweise die Gibberelline A1, A3 (= Gibberellinsäure), A4 und A7 infrage, besonders bevorzugt verwendet man die Gibberellinsäure. Die Gibberelline sind bekannt (vgl. R. Wegler "Chemie der Pflanzenschutz- und Schädlingsbekämpfungsmittel", Bd. 2, Springer Verlag, 1970, S. 401-412).

Die erfindungsgemäß verwendbaren Beizmittel-Formulierungen können entweder direkt oder nach vorherigem Verdünnen mit Wasser zur Behandlung von Saatgut der verschiedensten Art, auch von Saatgut transgener Pflanzen, eingesetzt werden. Dabei können im Zusammenwirken mit den durch Expression gebildeten Substanzen auch zusätzliche synergistische Effekte auftreten.

Zur Behandlung von Saatgut mit den erfindungsgemäß verwendbaren Beizmittel-Formulierungen oder den daraus durch Zugabe von Wasser hergestellten Zubereitungen kommen alle üblicherweise für die Beizung einsetzbaren Mischgeräte in Betracht. Im einzelnen geht man bei der Beizung so vor, dass man das Saatgut in einen Mischer gibt, die jeweils gewünschte Menge an Beizmittel-Formulierungen entweder als solche oder nach vorherigem Verdünnen mit Wasser hinzufügt und bis zur gleichmäßigen Verteilung der Formulierung auf dem Saatgut mischt. Gegebenenfalls schließt sich ein Trocknungsvorgang an.

Das erfindungsgemäße Behandlungsverfahren kann für die Behandlung von genetisch modifizierten Organismen (GMOs), z. B. Pflanzen oder Samen, verwendet werden. Genetisch modifizierte Pflanzen (oder transgene Pflanzen) sind Pflanzen, bei denen ein heterologes Gen stabil in das Genom integriert worden ist. Der Begriff "heterologes Gen" bedeutet im wesentlichen ein Gen, das außerhalb der Pflanze bereitgestellt oder assembliert wird und das bei Einführung in das Zellkerngenom, das Chloroplastengenom oder das Hypochondriengenom der transformierten Pflanze dadurch neue oder verbesserte agronomische oder sonstige Eigenschaften verleiht, daß es ein interessierendes Protein oder Polypeptid exprimiert oder daß es ein anderes Gen, das in der Pflanze vorliegt bzw. andere Gene, die in der Pflanze vorliegen, herunterreguliert oder abschaltet (zum Beispiel mittels Antisense-Technologie, Cosuppressionstechnologie oder RNAi-Technologie [RNA Interference]). Ein heterologes Gen, das im Genom vorliegt, wird ebenfalls als Transgen bezeichnet. Ein Transgen, das durch sein spezifisches Vorliegen im Pflanzengenom definiert ist, wird als Transformations- bzw. transgenes Event bezeichnet.

In Abhängigkeit von den Pflanzenarten oder Pflanzensorten, ihrem Standort und ihren Wachstumsbedingungen (Böden, Klima, Vegetationsperiode, Ernährung) kann die erfindungsgemäße Behandlung auch zu überadditiven ("synergistischen") Effekten führen. So sind zum Beispiel die folgenden Effekte möglich, die über die eigentlich zu erwartenden Effekte hinausgehen: verringerte Aufwandmengen und/oder erweitertes Wirkungsspektrum und/oder erhöhte Wirksamkeit der Wirkstoffe und Zusammensetzungen, die erfindungsgemäß eingesetzt werden können, besseres Pflanzenwachstum, erhöhte Toleranz gegenüber hohen oder niedrigen Temperaturen, erhöhte Toleranz gegenüber Trockenheit oder Wasser- oder Bodensalzgehalt, erhöhte Blühleistung, Emteerleichterung, Reifebeschleunigung, höhere Erträge, größere Früchte, größere Pflanzenhöhe, intensiver grüne Farbe des Blatts, frühere Blüte, höhere Qualität und/oder höherer Nährwert der Ernteprodukte, höhere Zuckerkonzentration in den Früchten, bessere Lagerfähigkeit und/oder Verarbeitbarkeit der Ernteprodukte.

In gewissen Aufwandmengen können die erfindungsgemäßen Wirkstoffkombinationen auch eine stärkende Wirkung auf Pflanzen ausüben. Sie eignen sich daher für die Mobilisierung des pflanzlichen Abwehrsystems gegen

Angriff durch unerwünschte phytopathogene Pilze und/oder Mikroorganismen und/oder Viren. Dies kann gegebenenfalls einer der Gründe für die erhöhte Wirksamkeit der erfindungsgemäßen Kombinationen sein, zum Beispiel gegen Pilze. Pflanzenstärkende (resistenzinduzierende) Substanzen sollen im vorliegenden Zusammenhang auch solche Substanzen oder Substanzkombinationen bedeuten, die fähig sind, das pflanzliche Abwehrsystem so zu stimulieren, daß die behandelten Pflanzen, wenn sie im Anschluß daran mit unerwünschten phytopathogenen Pilzen und/oder Mikroorganismen und/oder Viren inokkuliert werde, einen beträchtlichen Resistenzgrad gegen diese unerwünschten phytopathogenen Pilze und/oder Mikroorganismen und/oder Viren aufweisen. Im vorliegenden Fall versteht man unter unerwünschten phytopathogenen Pilzen und/oder Mikroorganismen und/oder Viren phytopathogene Pilze, Bakterien und Viren. Die erfindungsgemäßen Substanzen lassen sich daher zum Schutz von Pflanzen gegen Angriff durch die erwähnten Pathogene innerhalb eines gewissen Zeitraums nach der Behandlung einsetzen. Der Zeitraum, über den eine Schutzwirkung erzielt wird, erstreckt sich im Allgemeinen von 1 bis 10 Tagen, vorzugsweise 1 bis 7 Tagen, nach der Behandlung der Pflanzen mit den Wirkstoffen.

Zu Pflanzen und Pflanzensorten, die vorzugsweise erfindungsgemäß behandelt werden, zählen alle Pflanzen, die über Erbgut verfügen, das diesen Pflanzen besonders vorteilhafte, nützliche Merkmale verleiht (egal, ob dies durch Züchtung und/oder Biotechnologie erzielt wurde).

Pflanzen und Pflanzensorten, die ebenfalls vorzugsweise erfindungsgemäß behandelt werden, sind gegen einen oder mehrere biotische Streßfaktoren resistent, d. h. diese Pflanzen weisen eine verbesserte Abwehr gegen tierische und mikrobielle Schädlinge wie Nematoden, Insekten, Milben, phytopathogene Pilze, Bakterien, Viren und/oder Viroide auf.

Pflanzen und Pflanzensorten, die ebenfalls erfindungsgemäß behandelt werden können, sind solche Pflanzen, die gegen einen oder mehrere abiotische Streßfaktoren resistent sind. Zu den abiotischen Streßbedingungen können zum Beispiel Dürre, Kälte- und Hitzebedingungen, osmotischer Streß, Staunässe, erhöhter Bodensalzgehalt, erhöhtes Ausgesetztsein an Mineralien, Ozonbedingungen, Starklichtbedingungen, beschränkte Verfügbarkeit von Stickstoffnährstoffen, beschränkte Verfügbarkeit von Phosphornährstoffen oder Vermeidung von Schatten zählen.

Pflanzen und Pflanzensorten, die ebenfalls erfindungsgemäß behandelt werden können, sind solche Pflanzen, die durch erhöhte Ertragseigenschaften gekennzeichnet sind. Ein erhöhter Ertrag kann bei diesen Pflanzen z. B. auf verbesserter Pflanzenphysiologie, verbessertem Pflanzenwuchs und verbesserter Pflanzenentwicklung, wie Wasserverwertungseffizienz, Wasserhalteeffizienz, verbesserter Stickstoffverwertung, erhöhter Kohlenstoffassimilation, verbesserter Photosynthese, verstärkter Keimkraft und beschleunigter Abreife beruhen. Der Ertrag kann weiterhin durch eine verbesserte Pflanzenarchitektur (unter Streß- und nicht-Streß-Bedingungen) beeinflußt werden, darunter frühe Blüte, Kontrolle der Blüte für die Produktion von Hybridsaatgut, Keimpflanzenwüchsigkeit, Pflanzengröße, Internodienzahl und -abstand, Wurzelwachstum, Samengröße, Fruchtgröße, Schotengröße, Schoten- oder Ährenzahl, Anzahl der Samen pro Schote oder Ähre, Samenmasse, verstärkte Samenfüllung, verringerter Samenausfall, verringertes Schotenplatzen sowie Standfestigkeit. Zu weiteren Ertragsmerkmalen zählen Samenzusammensetzung wie Kohlenhydratgehalt, Proteingehalt, Ölgehalt und Ölzusammensetzung, Nährwert, Verringerung der nährwidrigen Verbindungen, verbesserte Verarbeitbarkeit und verbesserte Lagerfähigkeit.

Pflanzen, die ebenfalls erfindungsgemäß behandelt werden können, sind Hybridpflanzen, die bereits die Eigenschaften der Heterosis bzw. des Hybrideffekts exprimieren, was im allgemeinen zu höherem Ertrag, höherer Wüchsigkeit, besserer Gesundheit und besserer Resistenz gegen biotische und abiotische Streßfaktoren führt. Solche Pflanzen werden typischerweise dadurch erzeugt, daß man eine ingezüchtete pollensterile Elternlinie (den weiblichen Kreuzungspartner) mit einer anderen ingezüchteten pollenfertilen Elternlinie (dem männlichen Kreuzungspartner) kreuzt. Das Hybridsaatgut wird typischerweise von den pollensterilen Pflanzen geerntet und an Vermehrer verkauft. Pollensterile Pflanzen können manchmal (z. B. beim Mais) durch Entfahnen (d. h. mechanischem Entfernen der männlichen Geschlechtsorgane bzw. der männlichen Blüten), produziert werden; es ist jedoch üblicher, daß die Pollensterilität auf genetischen Determinanten im Pflanzengenom beruht. In diesem Fall, insbesondere dann, wenn es sich bei dem gewünschten Produkt, da man von den Hybridpflanzen ernten will, um die Samen handelt, ist es üblicherweise günstig, sicherzustellen, daß die Pollenfertilität in Hybridpflanzen, die die für die Pollensterilität verantwortlichen genetischen Determinanten enthalten, völlig restoriert wird. Dies kann erreicht werden, indem sichergestellt wird, daß die männlichen Kreuzungspartner entsprechende Fertilitätsrestorergene besitzen, die in der Lage sind, die Pollenfertilität in Hybridpflanzen, die die genetischen Determinanten, die für die Pollensterilität verantwortlich sind, enthalten, zu restorieren. Genetische Determinanten für Pollensterilität können im Cytoplasma lokalisiert sein. Beispiele für cytoplasmatische Pollensterilität (CMS) wurden zum Beispiel für Brassica-Arten beschrieben (WO 1992/005251, WO 1995/009910, WO 1998/27806, WO 2005/002324, WO 2006/021972 und US 6,229,072). Genetische Determinanten für Pollensterilität können jedoch auch im Zellkerngenom lokalisiert sein. Pollensterile Pflanzen können auch mit Methoden der pflanzlichen Biotechnologie, wie Gentechnik, erhalten werden. Ein besonders günstiges Mittel zur Erzeugung von pollensterilen Pflanzen ist in WO 89/10396 beschrieben, wobei zum Beispiel eine Ribonuklease wie eine Bamase selektiv in den Tapetumzellen in den Staubblättern exprimiert wird. Die Fertilität kann dann durch Expression eines Ribonukleasehemmers wie Barstar in den Tapetumzellen restoriert werden (z. B. WO 1991/002069).

Pflanzen oder Pflanzensorten (die mit Methoden der Pflanzenbiotechnologie, wie der Gentechnik, erhalten werden), die erfindungsgemäß behandelt werden können, sind herbizidtolerante Pflanzen, d. h. Pflanzen, die gegenüber einem oder mehreren vorgegebenen Herbiziden tolerant gemacht worden sind. Solche Pflanzen können entweder durch genetische Transformation oder durch Selektion von Pflanzen, die eine Mutation enthalten, die solch eine Herbizidtoleranz verleiht, erhalten werden.

Herbizidtolerante Pflanzen sind zum Beispiel glyphosatetolerante Pflanzen, d. h. Pflanzen, die gegenüber dem Herbizid Glyphosate oder dessen Salzen tolerant gemacht worden sind. So können zum Beispiel glyphosatetolerante Pflanzen durch Transformation der Pflanze mit einem Gen, das für das Enzym 5-Enolpyruvylshikimat-3-phosphatsynthase (EPSPS) kodiert, erhalten werden. Beispiele für solche EPSPS-Gene sind das AroA-Gen (Mutante CT7) des Bakterium *Salmonella typhimurium* (Comai et al., Science (1983), 221, 370-371), das CP4-Gen des Bakteriums *Agrobacterium sp.* (Barry et al., Curr. Topics Plant Physiol. (1992), 7, 139-145), die Gene, die für eine EPSPS aus der Petunie (Shah et al., Science (1986), 233, 478-481), für eine EPSPS aus der Tomate (Gasser et al., J. Biol. Chem. (1988), 263, 4280-4289) oder für eine EPSPS aus Eleusine (WO 2001/66704) kodieren. Es kann sich auch um eine mutierte EPSPS handeln, wie sie zum Beispiel in EP-A 0837944, WO 2000/066746, WO 2000/066747 oder WO 2002/026995 beschrieben ist. Glyphosatetolerante Pflanzen können auch dadurch erhalten werden, daß man ein Gen exprimiert, das für ein Glyphosate-Oxidoreduktase-Enzym, wie es in US 5,776,760 und US 5,463,175 beschrieben ist, kodiert. Glyphosatetolerante Pflanzen können auch dadurch erhalten werden, daß man ein Gen exprimiert, das für ein Glyphosate-acetyltransferase-Enzym, wie es in z. B. WO 2002/036782, WO 2003/092360, WO 2005/012515 und WO 2007/024782 beschrieben ist, kodiert. Glyphosatetolerante Pflanzen können auch dadurch erhalten werden, daß man Pflanzen, die natürlich vorkommende Mutationen der oben erwähnten Gene, wie sie zum Beispiel in WO 2001/024615 oder WO 2003/013226 beschrieben sind, enthalten, selektiert.

Sonstige herbizidresistente Pflanzen sind zum Beispiel Pflanzen, die gegenüber Herbiziden, die das Enzym Glutaminsynthase hemmen, wie Bialaphos, Phosphinotricin oder Glufosinate, tolerant gemacht worden sind. Solche Pflanzen können dadurch erhalten werden, daß man ein Enzym exprimiert, das das Herbizid oder eine Mutante des Enzyms Glutaminsynthase, das gegenüber Hemmung resistent ist, entgiftet. Solch ein wirksames entgiftendes Enzym ist zum Beispiel ein Enzym, das für ein Phosphinotricin-acetyltransferase kodiert (wie zum Beispiel das bar- oder pat-Protein aus Streptomyces-Arten). Pflanzen, die eine exogene Phosphinotricin-acetyltransferase exprimieren, sind zum Beispiel in US 5,561,236; US 5,648,477; US 5,646,024; US 5,273,894; US 5,637,489; US 5,276,268; US 5,739,082; US 5,908,810 und US 7,112,665 beschrieben.

Weitere herbizidtolerante Pflanzen sind auch Pflanzen, die gegenüber den Herbiziden, die das Enzym Hydroxyphenylpyruvatdioxygenase (HPPD) hemmen, tolerant gemacht worden sind. Bei den Hydroxyphenylpyruvatdioxygenasen handelt es sich um Enzyme, die die Reaktion, in der para-Hydroxyphenylpyruvat (HPP) zu Homogentisat umgesetzt wird, katalysieren. Pflanzen, die gegenüber HPPD-Hemmern tolerant sind, können mit einem Gen, das für ein natürlich vorkommendes resistentes HPPD-Enzym kodiert, oder einem Gen, das für ein mutiertes HPPD-Enzym gemäß WO 1996/038567, WO 1999/024585 und WO 1999/024586 kodiert, transformiert werden. Eine Toleranz gegenüber HPPD-Hemmern kann auch dadurch erzielt werden, daß man Pflanzen mit Genen transformiert, die für gewisse Enzyme kodieren, die die Bildung von Homogentisat trotz Hemmung des nativen HPPD-Enzyms durch den HPPD-Hemmer ermöglichen. Solche Pflanzen und Gene sind in WO 1999/034008 und WO 2002/36787 beschrieben. Die Toleranz von Pflanzen gegenüber HPPD-Hemmern kann auch dadurch verbessert werden, daß man Pflanzen zusätzlich zu einem Gen, das für ein HPPD-tolerantes Enzym kodiert, mit einem Gen transformiert, das für ein Prephenatdehydrogenase-Enzym kodiert, wie dies in WO 2004/024928 beschrieben ist.

Weitere herbizidresistente Pflanzen sind Pflanzen, die gegenüber Acetolactatsynthase (ALS)-Hemmern tolerant gemacht worden sind. Zu bekannten ALS-Hemmern zählen zum Beispiel Sulfonylhamstoff, Imidazolinon, Triazolopyrimidine, Pyrimidinyloxy(thio)benzoate und/oder Sulfonylaminocarbonyltriazolinon-Herbizide. Es ist bekannt, daß verschiedene Mutationen im Enzym ALS (auch als Acetohydroxysäure-Synthase, AHAS, bekannt) eine Toleranz gegenüber unterschiedlichen Herbiziden bzw. Gruppen von Herbiziden verleihen, wie dies zum Beispiel bei Tranel und Wright, Weed Science (2002), 50, 700-712, jedoch auch in US 5,605,011, US 5,378,824, US 5,141,870 und US 5,013,659, beschrieben ist. Die Herstellung von sulfonylharnstofftoleranten Pflanzen und imidazolinontoleranten Pflanzen ist in US 5,605,011; US 5,013,659; US 5,141,870; US 5,767,361; US 5,731,180; US 5,304,732; US 4,761,373; US 5,331,107; US 5,928,937; und US 5,378,824; sowie in der internationalen Veröffentlichung WO 1996/033270 beschrieben. Weitere imidazolinontolerante Pflanzen sind auch in z. B. WO 2004/040012, WO 2004/106529, WO 2005/020673, WO 2005/093093, WO 2006/007373, WO 2006/015376, WO 2006/024351 und WO 2006/060634 beschrieben. Weitere sulfonylharnstoff- und imidazolinontolerante Pflanzen sind auch in z.B. WO 2007/024782 beschrieben.

Weitere Pflanzen, die gegenüber Imidazolinon und/oder Sulfonylharnstoff tolerant sind, können durch induzierte Mutagenese, Selektion in Zellkulturen in Gegenwart des Herbizids oder durch Mutationszüchtung erhalten werden, wie dies zum Beispiel für die Sojabohne in US 5,084,082, für Reis in WO 1997/41218, für die Zuckerrübe in US 5,773,702 und WO 1999/057965, für Salat in US 5,198,599 oder für die Sonnenblume in WO 2001/065922 beschrieben ist.

Pflanzen oder Pflanzensorten (die nach Methoden der pflanzlichen Biotechnologie, wie der Gentechnik, erhalten

wurden), die ebenfalls erfindungsgemäß behandelt werden können, sind insektenresistente transgene Pflanzen, d.h. Pflanzen, die gegen Befall mit gewissen Zielinsekten resistent gemacht wurden. Solche Pflanzen können durch genetische Transformation oder durch Selektion von Pflanzen, die eine Mutation enthalten, die solch eine Insektenresistenz verleiht, erhalten werden.

Der Begriff "insektenresistente transgene Pflanze" umfaßt im vorliegenden Zusammenhang jegliche Pflanze, die mindestens ein Transgen enthält, das eine Kodiersequenz umfaßt, die für folgendes kodiert:

1) ein insektizides Kristallprotein aus *Bacillus thuringiensis* oder einen insektiziden Teil davon, wie die insektiziden Kristallproteine, die von Crickmore et al., Microbiology and Molecular Biology Reviews (1998), 62, 807-813, von Crickmore et al. (2005) in der Bacillus thuringiensis -Toxinnomenklatur aktualisiert, online bei: http://www.lifesci.sussex.ac.uk/Home/Neil_Crickmore/Bt/), zusammengestellt wurden, oder insektizide Teile davon, z.B. Proteine der Cry-Proteinklassen Cry1Ab, Cry1Ac, Cry1F, Cry2Ab, Cry3Ae oder Cry3Bb oder insektizide Teile davon; oder

2) ein Kristallprotein aus Bacillus thuringiensis oder einen Teil davon, der in Gegenwart eines zweiten, anderen Kristallproteins als Bacillus thuringiensis oder eines Teils davon insektizid wirkt, wie das binäre Toxin, das aus den Kristallproteinen Cy34 und Cy35 besteht (Moellenbeck et al., Nat. Biotechnol. (2001), 19, 668-72; Schnepf et al., Applied Environm. Microb. (2006), 71, 1765-1774); oder

3) ein insektizides Hybridprotein, das Teile von zwei unterschiedlichen insektiziden Kristallproteinen aus Bacillus thuringiensis umfaßt, wie zum Beispiel ein Hybrid aus den Proteinen von 1) oben oder ein Hybrid aus den Proteinen von 2) oben, z. B. das Protein Cry1A.105, das von dem Mais-Event MON98034 produziert wird (WO 2007/027777); oder

4) ein Protein gemäß einem der Punkte 1) bis 3) oben, in dem einige, insbesondere 1 bis 10, Aminosäuren durch eine andere Aminosäure ersetzt wurden, um eine höhere insektizide Wirksamkeit gegenüber einer Zielinsektenart zu erzielen und/oder um das Spektrum der entsprechenden Zielinsektenarten zu erweitern und/oder wegen Veränderungen, die in die Kodier-DNA während der Klonierung oder Transformation induziert wurden, wie das Protein Cry3Bb1 in Mais-Events MON863 oder MON88017 oder das Protein Cry3A im Mais-Event MIR 604; oder

5) ein insektizides sezerniertes Protein aus Bacillus thuringiensis oder Bacillus cereus oder einen insektiziden Teil davon, wie die vegetativ wirkenden insektentoxischen Proteine (vegetative insekticidal proteins, VIP), die unter http://www.lifesci.sussex.ac.uk/Home/Neil_Crickmore/Bt/vip.html angeführt sind, z. B. Proteine der Proteinklasse VIP3Aa; oder

6) ein sezerniertes Protein aus Bacillus thuringiensis oder Bacillus cereus, das in Gegenwart eines zweiten sezernierten Proteins aus Bacillus thuringiensis oder B. cereus insektizid wirkt, wie das binäre Toxin, das aus den Proteinen VIP1A und VIP2A besteht (WO 1994/21795); oder

7) ein insektizides Hybridprotein, das Teile von verschiedenen sezernierten Proteinen von Bacillus thuringiensis oder Bacillus cereus umfaßt, wie ein Hybrid der Proteine von 1) oder ein Hybrid der Proteine von 2) oben; oder

8) ein Protein gemäß einem der Punkte 1) bis 3) oben, in dem einige, insbesondere 1 bis 10, Aminosäuren durch eine andere Aminosäure ersetzt wurden, um eine höhere insektizide Wirksamkeit gegenüber einer Zielinsektenart zu erzielen und/oder um das Spektrum der entsprechenden Zielinsektenarten zu erweitern und/oder wegen Veränderungen, die in die Kodier-DNA während der Klonierung oder Transformation induziert wurden (wobei die Kodierung für ein insektizides Protein erhalten bleibt), wie das Protein VIP3Aa im Baumwoll-Event COT 102.

Natürlich zählt zu den insektenresistenten transgenen Pflanzen im vorliegenden Zusammenhang auch jegliche Pflanze, die eine Kombination von Genen umfaßt, die für die Proteine von einer der oben genannten Klassen 1 bis 8 kodieren. In einer Ausführungsform enthält eine insektenresistente Pflanze mehr als ein Transgen, das für ein Protein nach einer der oben genannten 1 bis 8 kodiert, um das Spektrum der entsprechenden Zielinsektenarten zu erweitern oder um die Entwicklung einer Resistenz der Insekten gegen die Pflanzen dadurch hinauszuzögern, daß man verschiedene Proteine einsetzt, die für dieselbe Zielinsektenart insektizid sind, jedoch eine unterschiedliche Wirkungsweise, wie Bindung an unterschiedliche Rezeptorbindungsstellen im Insekt, aufweisen.

Pflanzen oder Pflanzensorten (die nach Methoden der pflanzlichen Biotechnologie, wie der Gentechnik, erhalten wurden), die ebenfalls erfindungsgemäß behandelt werden können, sind gegenüber abiotischen Streßfaktoren tolerant. Solche Pflanzen können durch genetische Transformation oder durch Selektion von Pflanzen, die eine Mutation enthalten, die solch eine Streßresistenz verleiht, erhalten werden. Zu besonders nützlichen Pflanzen mit Streßtoleranz zählen

folgende:

a. Pflanzen, die ein Transgen enthalten, das die Expression und/oder Aktivität des Gens für die Poly(ADP-ribose) polymerase (PARP) in den Pflanzenzellen oder Pflanzen zu reduzieren vermag, wie dies in WO 2000/004173 oder EP 04077984.5 oder EP 06009836.5 beschrieben ist.

b. Pflanzen, die ein streßtoleranzförderndes Transgen enthalten, das die Expression und/oder Aktivität der für PARG kodierenden Gene der Pflanzen oder Pflanzenzellen zu reduzieren vermag, wie dies z.B. in WO 2004/090140 beschrieben ist;

c. Pflanzen, die ein streßtoleranzförderndes Transgen enthalten, das für ein in Pflanzen funktionelles Enzym des Nicotinamidadenindinukleotid-Salvage-Biosynthesewegs kodiert, darunter Nicotinamidase, Nicotinatphosphoribosyltransferase, Nicotinsäuremononukleotidadenyltransferase, Nicotinamidadenindinukleotidsynthetase oder Nicotinamidphosphoribosyltransferase, wie dies z. B. in EP 04077624.7 oder WO 2006/133827 oder PCT/EP07/002433 beschrieben ist.

Pflanzen oder Pflanzensorten (die nach Methoden der pflanzlichen Biotechnologie, wie der Gentechnik, erhalten wurden), die ebenfalls erfindungsgemäß behandelt werden können, weisen eine veränderte Menge, Qualität und/oder Lagerfähigkeit des Ernteprodukts und/oder veränderte Eigenschaften von bestimmten Bestandteilen des Ernteprodukts auf, wie zum Beispiel:

1) Transgene Pflanzen, die eine modifizierte Stärke synthetisieren, die bezüglich ihrer chemischphysikalischen Eigenschaften, insbesondere des Amylosegehalts oder des Amylose/Amylopektin-Verhältnisses, des Verzweigungsgrads, der durchschnittlichen Kettenlänge, der Verteilung der Seitenketten, des Viskositätsverhaltens, der Gelfestigkeit, der Stärkekomgröße und/oder Stärkekornmorphologie im Vergleich mit der synthetisierten Stärke in Wildtyppflanzenzellen oder -pflanzen verändert ist, so daß sich diese modifizierte Stärke besser für bestimmte Anwendungen eignet. Diese transgenen Pflanzen, die eine modifizierte Stärke synthetisieren, sind zum Beispiel in EP 0571427, WO 1995/004826, EP 0719338, WO 1996/15248, WO 1996/19581, WO 1996/27674, WO 1997/11188, WO 1997/26362, WO 1997/32985, WO 1997/42328, WO 1997/44472, WO 1997/45545, WO 1998/27212, WO 1998/40503, WO 99/58688, WO 1999/58690, WO 1999/58654, WO 2000/008184, WO 2000/008185, WO 2000/28052, WO 2000/77229, WO 2001/12782, WO 2001/12826, WO 2002/101059, WO 2003/071860, WO 2004/056999, WO 2005/030942, WO 2005/030941, WO 2005/095632, WO 2005/095617, WO 2005/095619, WO 2005/095618, WO 2005/123927, WO 2006/018319, WO 2006/103107, WO 2006/108702, WO 2007/009823, WO 2000/22140, WO 2006/063862, WO 2006/072603, WO 2002/034923, EP 06090134.5, EP 06090228.5, EP 06090227.7, EP 07090007.1, EP 07090009.7, WO 2001/14569, WO 2002/79410, WO 2003/33540, WO 2004/078983, WO 2001/19975, WO 1995/26407, WO 1996/34968, WO 1998/20145, WO 1999/12950, WO 1999/66050, WO 1999/53072, US 6,734,341, WO 2000/11192, WO 1998/22604, WO 1998/32326, WO 2001/98509, WO 2001/98509, WO 2005/002359, US 5,824,790, US 6,013,861, WO 1994/004693, WO 1994/009144, WO 1994/11520, WO 1995/35026 bzw. WO 1997/20936 beschrieben.

2) Transgene Pflanzen, die Nichtstärkekohlenhydratpolymere synthetisieren, oder Nichtstärkekohlenhydratpolymere, deren Eigenschaften im Vergleich zu Wildtyppflanzen ohne genetische Modifikation verändert sind. Beispiele sind Pflanzen, die Polyfructose, insbesondere des Inulin- und Levantyps, produzieren, wie dies in EP 0663956, WO 1996/001904, Wo 1996/021023, WO 1998/039460 und WO 1999/024593 beschrieben ist, Pflanzen, die alpha-1,4-Glucane produzieren, wie dies in WO 1995/031553, US 2002/031826, US 6,284,479, US 5,712,107, WO 1997/047806, WO 1997/047807, WO 1997/047808 und WO 2000/14249 beschrieben ist, Pflanzen, die alpha-1,6-verzweigte alpha-1,4-Glucane produzieren, wie dies in WO 2000/73422 beschrieben ist, und Pflanzen, die Alternan produzieren, wie dies in WO 2000/047727, EP 06077301.7, US 5,908,975 und EP 0728213 beschrieben ist.

3) Transgene Pflanzen, die Hyaluronan produzieren, wie dies zum Beispiel in WO 2006/032538, WO 2007/039314, WO 2007/039315, WO 2007/039316, JP 2006/304779 und WO 2005/012529 beschrieben ist.

Pflanzen oder Pflanzensorten (die nach Methoden der pflanzlichen Biotechnologie, wie der Gentechnik, erhalten wurden), die ebenfalls erfindungsgemäß behandelt werden können, sind Pflanzen wie Baumwollpflanzen mit veränderten Fasereigenschaften. Solche Pflanzen können durch genetische Transformation oder durch Selektion von Pflanzen, die eine Mutation enthalten, die solche veränderten Fasereigenschaften verleiht, erhalten werden; dazu zählen:

a) Pflanzen wie Baumwollpflanzen, die eine veränderte Form von Cellulosesynthasegenen enthalten, wie dies in

WO 1998/000549 beschrieben ist,

b) Pflanzen wie Baumwollpflanzen, die eine veränderte Form von rsw2- oder rsw3-homologen Nukleinsäuren enthalten, wie dies in WO 2004/053219 beschrieben ist;

c) Pflanzen wie Baumwollpflanzen mit einer erhöhten Expression der Saccharosephosphatsynthase, wie dies in WO 2001/017333 beschrieben ist;

d) Pflanzen wie Baumwollpflanzen mit einer erhöhten Expression der Saccharosesynthase, wie dies in WO 02/45485 beschrieben ist;

e) Pflanzen wie Baumwollpflanzen bei denen der Zeitpunkt der Durchlaßsteuerung der Plasmodesmen an der Basis der Faserzelle verändert ist, z. B. durch Herunterregulieren der faserselektiven β-1,3-Glucanase, wie dies in WO 2005/017157 beschrieben ist;

f) Pflanzen wie Baumwollpflanzen mit Fasern mit veränderter Reaktivität, z. B. durch Expression des N-Acetylglucosamintransferasegens, darunter auch nodC, und von Chitinsynthasegenen, wie dies in WO 2006/136351 beschrieben ist.

Pflanzen oder Pflanzensorten (die nach Methoden der pflanzlichen Biotechnologie, wie der Gentechnik, erhalten wurden), die ebenfalls erfindungsgemäß behandelt werden können, sind Pflanzen wie Raps oder verwandte Brassica-Pflanzen mit veränderten Eigenschaften der Ölzusammensetzung. Solche Pflanzen können durch genetische Transformation oder durch Selektion von Pflanzen, die eine Mutation enthalten, die solche veränderten Öleigenschaften verleiht, erhalten werden; dazu zählen:

a) Pflanzen wie Rapspflanzen, die Öl mit einem hohen Ölsäuregehalt produzieren, wie dies zum Beispiel in US 5,969,169, US 5,840,946 oder US 6,323,392 oder US 6,063, 947 beschrieben ist;

b) Pflanzen wie Rapspflanzen, die Öl mit einem niedrigen Linolensäuregehalt produzieren, wie dies in US 6,270828, US 6,169,190 oder US 5,965,755 beschrieben ist.

c) Pflanzen wie Rapspflanzen, die Öl mit einem niedrigen gesättigten Fettsäuregehalt produzieren, wie dies z. B. in US 5,434,283 beschrieben ist.

Besonders nützliche transgene Pflanzen, die erfindungsgemäß behandelt werden können, sind Pflanzen mit einem oder mehreren Genen, die für ein oder mehrere Toxine kodieren, sind die transgenen Pflanzen, die unter den folgenden Handelsbezeichnungen angeboten werden: YIELD GARD® (zum Beispiel Mais, Baumwolle, Sojabohnen), KnockOut® (zum Beispiel Mais), Bite-Gard® (zum Beispiel Mais), BT-Xtra® (zum Beispiel Mais), StarLink® (zum Beispiel Mais), Bollgard® (Baumwolle), Nucotn® (Baumwolle), Nucotn 33B® (Baumwolle), NatureGard® (zum Beispiel Mais), Protecta® und NewLeaf® (Kartoffel). Herbizidtolerante Pflanzen, die zu erwähnen sind, sind zum Beispiel Maissorten, Baumwollsorten und Sojabohnensorten, die unter den folgenden Handelsbezeichnungen angeboten werden: Roundup Ready® (Glyphosatetoleranz, zum Beispiel Mais, Baumwolle, Sojabohne), Liberty Link® (Phosphinotricintoleranz, zum Beispiel Raps), IMI® (Imidazolinontoleranz) und SCS® (Sylfonylharnstofftoleranz), zum Beispiel Mais. Zu den herbizidresistenten Pflanzen (traditionell auf Herbizidtoleranz gezüchtete Pflanzen), die zu erwähnen sind, zählen die unter der Bezeichnung Clearfield® angebotenen Sorten (zum Beispiel Mais).

Besonders nützliche transgene Pflanzen, die erfindungsgemäß behandelt werden können, sind Pflanzen, die Transformations-Events, oder eine Kombination von Transformations-Events, enthalten und die zum Beispiel in den Dateien von verschiedenen nationalen oder regionalen Behörden angeführt sind (siehe zum Beispiel http://gmoinfo.jrc.it/gmp_browse.aspx und http://www.agbios.com/dbase.php).

Die aufgeführten Pflanzen können besonders vorteilhaft mit den erfindungsgemäßen Wirkstoffkombinationen behandelt werden. Die bei den Wirkstoffkombinationen oben angegebenen Vorzugsbereiche gelten auch für die Behandlung dieser Pflanzen. Besonders hervorgehoben sei die Pflanzenbehandlung mit den im vorliegenden Text speziell aufgeführten Wirkstoffkombinationen.

Die erfindungsgemäßen Wirkstoffkombinationen wirken nicht nur gegen Pflanzen-, Hygiene- und Vorratsschädlinge, sondern auch auf dem veterinärmedizinischen Sektor gegen tierische Parasiten (Ekto- und Endoparasiten) wie Schildzecken, Lederzecken, Räudemilben, Laufmilben, Fliegen (stechend und leckend), parasitierende Fliegenlarven, Läuse, Haarlinge, Federlinge und Flöhe. Zu diesen Parasiten gehören:

Aus der Ordnung der Anoplurida z.B. Haematopinus spp., Linognathus spp., Pediculus spp., Phtirus spp.,

Solenopotes spp..

Aus der Ordnung der Mallophagida und den Unterordnungen Amblycerina sowie Ischnocerina z.B. Trimenopon spp., Menopon spp., Trinoton spp., Bovicola spp., Werneckiella spp., Lepikentron spp., Damalina spp., Trichodectes spp., Felicola spp..

Aus der Ordnung Diptera und den Unterordnungen Nematocerina sowie Brachycerina z.B. Aedes spp., Anopheles spp., Culex spp., Simulium spp., Eusimulium spp., Phlebotomus spp., Lutzomyia spp., Culicoides spp., Chrysops spp., Hybomitra spp., Atylotus spp., Tabanus spp., Haematopota spp., Philipomyia spp., Braula spp., Musca spp., Hydrotaea spp., Stomoxys spp., Haematobia spp., Morellia spp., Fannia spp., Glossina spp., Calliphora spp., Lucilia spp., Chrysomyia spp., Wohlfahrtia spp., Sarcophaga spp., Oestrus spp., Hypoderma spp., Gasterophilus spp., Hippobosca spp., Lipoptena spp., Melophagus spp..

Aus der Ordnung der Siphonapterida z.B. Pulex spp., Ctenocephalides spp., Xenopsylla spp., Ceratophyllus spp..

Aus der Ordnung der Heteropterida z.B. Cimex spp., Triatoma spp., Rhodnius spp., Panstrongylus spp..

Aus der Ordnung der Blattarida z.B. Blatta orientalis, Periplaneta americana, Blattela germanica, Supella spp..

Aus der Unterklasse der Acari (Acarina) und den Ordnungen der Meta- sowie Mesostigmata z.B. Argas spp., Ornithodorus spp., Otobius spp., Ixodes spp., Amblyomma spp., Boophilus spp., Dermacentor spp., Haemophysalis spp., Hyalomma spp., Rhipicephalus spp., Dermanyssus spp., Raillietia spp., Pneumonyssus spp., Sternostoma spp., Varroa spp..

Aus der Ordnung der Actinedida (Prostigmata) und Acaridida (Astigmata) z.B. Acarapis spp., Cheyletiella spp., Ornithocheyletia spp., Myobia spp., Psorergates spp., Demodex spp., Trombicula spp., Listrophorus spp., Acarus spp., Tyrophagus spp., Caloglyphus spp., Hypodectes spp., Pterolichus spp., Psoroptes spp., Chorioptes spp., Otodectes spp., Sarcoptes spp., Notoedres spp., Knemidocoptes spp., Cytodites spp., Laminosioptes spp..

Die erfindungsgemäßen Wirkstoffkombinationen eignen sich auch zur Bekämpfung von Arthropoden, die landwirtschaftliche Nutztiere, wie z.B. Rinder, Schafe, Ziegen, Pferde, Schweine, Esel, Kamele, Büffel, Kaninchen, Hühner, Puten, Enten, Gänse, Bienen, sonstige Haustiere wie z.B. Hunde, Katzen, Stubenvögel, Aquarienfische sowie sogenannte Versuchstiere, wie z.B. Hamster, Meerschweinchen, Ratten und Mäuse befallen. Durch die Bekämpfung dieser Arthropoden sollen Todesfälle und Leistungsminderungen (bei Fleisch, Milch, Wolle, Häuten, Eiern, Honig usw.) vermindert werden, so daß durch den Einsatz der erfindungsgemäßen Wirkstoffkombinationen eine wirtschaftlichere und einfachere Tierhaltung möglich ist.

Die Anwendung der erfindungsgemäßen Wirkstoffkombinationen geschieht im Veterinärsektor und bei der Tierhaltung in bekannter Weise durch enterale Verabreichung in Form von beispielsweise Tabletten, Kapseln, Tränken; Drenchen, Granulaten, Pasten, Boli, des feed-through-Verfahrens, von Zäpfchen, durch parenterale Verabreichung, wie zum Beispiel durch Injektionen (intramuskulär, subcutan, intravenös, intraperitonal u.a.), Implantate, durch nasale Applikation, durch dermale Anwendung in Form beispielsweise des Tauchens oder Badens (Dippen), Sprühens (Spray), Aufgießens (Pour-on und Spot-on), des Waschens, des Einpuderns sowie mit Hilfe von wirkstoffhaltigen Formkörpern, wie Halsbändern, Ohrmarken, Schwanzmarken, Gliedmaßenbändem, Halftern, Markierungsvorrichtungen usw.

Bei der Anwendung für Vieh, Geflügel, Haustiere etc. kann man die Wirkstoffkombinationen als Formulierungen (beispielsweise Pulver, Emulsionen, fließfähige Mittel), die die Wirkstoffe in einer Menge von 1 bis 80 Gew.-% enthalten, direkt oder nach 100 bis 10 000-facher Verdünnung anwenden oder sie als chemisches Bad verwenden.

Außerdem wurde gefunden, daß die erfindungsgemäßen Wirkstoffkombinationen eine hohe insektizide Wirkung gegen Insekten zeigen, die technische Materialien zerstören.

Beispielhaft und vorzugsweise - ohne jedoch zu limitieren - seien die folgenden Insekten genannt:

Käfer wie Hylotrupes bajulus, Chlorophorus pilosis, Anobium punctatum, Xestobium rufovillosum, Ptilinus pecticornis, Dendrobium pertinex, Ernobius mollis, Priobium carpini, Lyctus brunneus, Lyctus africanus, Lyctus planicollis, Lyctus linearis, Lyctus pubescens, Trogoxylon aequale, Minthes rugicollis, Xyleborus spec. Tryptodendron spec. Apate monachus, Bostrychus capucins, Heterobostrychus brunneus, Sinoxylon spec. Dinoderus minutus;

Hautflügler wie Sirex juvencus, Urocerus gigas, Urocerus gigas taignus, Urocerus augur;

Termiten wie Kalotermes flavicollis, Cryptotermes brevis, Heterotermes indicola, Reticulitermes flavipes, Reticulitermes santonensis, Reticulitermes lucifugus, Mastotermes darwiniensis, Zootermopsis nevadensis, Coptotermes formosanus;

Borstenschwänze wie Lepisma saccharina.

Unter technischen Materialien sind im vorliegenden Zusammenhang nicht-lebende Materialien zu verstehen, wie vorzugsweise Kunststoffe, Klebstoffe, Leime, Papiere und Kartone, Leder, Holz, Holzverarbeitungsprodukte und Anstrichmittel.

Die anwendungsfertigen Mittel können gegebenenfalls noch weitere Insektizide und gegebenenfalls noch ein oder mehrere Fungizide enthalten.

Hinsichtlich möglicher zusätzlicher Zumischpartner sei auf die oben genannten Insektizide und Fungizide verwiesen.

Zugleich können die erfindungsgemäßen Wirkstoffkombinationen zum Schutz vor Bewuchs von Gegenständen, insbesondere von Schiffskörpern, Sieben, Netzen, Bauwerken, Kaianlagen und Signalanlagen, welche mit See- oder Brackwasser in Verbindung kommen, eingesetzt werden.

Weiter können die erfindungsgemäßen Wirkstoffkombinationen allein oder in Kombinationen mit anderen Wirkstoffen als Antifouling-Mittel eingesetzt werden.

Die Wirkstoffkombinationen eignen sich auch zur Bekämpfung von tierischen Schädlingen im Haushalts-, Hygiene- und Vorratsschutz, insbesondere von Insekten, Spinnentieren und Milben, die in geschlossenen Räumen, wie beispielsweise Wohnungen, Fabrikhallen, Büros, Fahrzeugkabinen u.ä. vorkommen. Sie können zur Bekämpfung dieser Schädlinge allein oder in Kombination mit anderen Wirk- und Hilfsstoffen in Haushaltsinsektizid-Produkten verwendet werden. Sie sind gegen sensible und resistente Arten sowie gegen alle Entwicklungsstadien wirksam. Zu diesen Schädlingen gehören:

Aus der Ordnung der Scorpionidea z.B. Buthus occitanus.

Aus der Ordnung der Acarina z.B. Argas persicus, Argas reflexus, Bryobia ssp., Dermanyssus gallinae, Glyciphagus domesticus, Ornithodorus moubat, Rhipicephalus sanguineus, Trombicula alfreddugesi, Neutrombicula autumnalis, Dermatophagoides pteronissimus, Dermatophagoides forinae.

Aus der Ordnung der Araneae z.B. Aviculariidae, Araneidae.

Aus der Ordnung der Opiliones z.B. Pseudoscorpiones chelifer, Pseudoscorpiones cheiridium, Opiliones phalangium.

Aus der Ordnung der Isopoda z.B. Oniscus asellus, Porcellio scaber.

Aus der Ordnung der Diplopoda z.B. Blaniulus guttulatus, Polydesmus spp..

Aus der Ordnung der Chilopoda z.B. Geophilus spp..

Aus der Ordnung der Zygentoma z.B. Ctenolepisma spp., Lepisma saccharina, Lepismodes inquilinus.

Aus der Ordnung der Blattaria z.B. Blatta orientalies, Blattella germanica, Blattella asahinai, Leucophaea maderae, Panchlora spp., Parcoblatta spp., Periplaneta australasiae, Periplaneta americana, Periplaneta brunnea, Periplaneta fuliginosa, Supella longipalpa.

Aus der Ordnung der Saltatoria z.B. Acheta domesticus.

Aus der Ordnung der Dermaptera z.B. Forficula auricularia.

Aus der Ordnung der Isoptera z.B. Kalotermes spp., Reticulitermes spp.

Aus der Ordnung der Psocoptera z.B. Lepinatus spp., Liposcelis spp.

Aus der Ordnung der Coleoptera z.B. Anthrenus spp., Attagenus spp., Dermestes spp., Latheticus oryzae, Necrobia spp., Ptinus spp., Rhizopertha dominica, Sitophilus granarius, Sitophilus oryzae, Sitophilus zeamais, Stegobium paniceum.

Aus der Ordnung der Diptera z.B. Aedes aegypti, Aedes albopictus, Aedes taeniorhynchus, Anopheles spp., Calliphora erythrocephala, Chrysozona pluvialis, Culex quinquefasciatus, Culex pipiens, Culex tarsalis, Drosophila spp., Fannia canicularis, Musca domestica, Phlebotomus spp., Sarcophaga carnaria, Simulium spp., Stomoxys calcitrans, Tipula paludosa.

Aus der Ordnung der Lepidoptera z.B. Achroia grisella, Galleria mellonella, Plodia interpunctella, Tinea cloacella, Tinea pellionella, Tineola bisselliella.

Aus der Ordnung der Siphonaptera z.B. Ctenocephalides canis, Ctenocephalides felis, Pulex irritans, Tunga penetrans, Xenopsylla cheopis.

Aus der Ordnung der Hymenoptera z.B. Camponotus herculeanus, Lasius fuliginosus, Lasius niger, Lasius umbratus, Monomorium pharaonis, Paravespula spp., Tetramorium caespitum.

Aus der Ordnung der Anoplura z.B. Pediculus humanus capitis, Pediculus humanus corporis, Pemphigus spp., Phylloera vastatrix, Phthirus pubis.

Aus der Ordnung der Heteroptera z.B. Cimex hemipterus, Cimex lectularius, Rhodinus prolixus, Triatoma infestans.

Die Anwendung im Bereich der Haushaltsinsektizide erfolgt allein oder in Kombination mit anderen geeigneten Wirkstoffen wie Phosphaten, Carbamaten, Pyrethroiden, Neonicotinoiden, Wachstumsregulatoren oder Wirkstoffen aus anderen bekannten Insektizidklassen.

Die Anwendung erfolgt in Aerosolen, drucklosen Sprühmitteln, z.B. Pump- und Zerstäubersprays, Nebelautomaten, Foggern, Schäumen, Gelen, Verdampferprodukten mit Verdampferplättchen aus Cellulose oder Kunststoff, Flüssigverdampfem, Gel- und Membranverdampfem, propellergetriebenen Verdampfern, energielosen bzw. passiven Verdampfungssystemen, Mottenpapieren, Mottensäckchen und Mottengelen, als Granulate oder Stäube, in Streuködern oder Köderstationen.

Die gute insektizide und akarizide Wirkung der erfindungsgemäßen Wirkstoffkombinationen geht aus den nachfolgenden Beispielen hervor. Während die einzelnen Wirkstoffe in der Wirkung Schwächen aufweisen, zeigen die Kombinationen eine Wirkung, die über eine einfache Wirkungssummierung hinausgeht.

Ein synergistischer Effekt liegt bei Insektiziden und Akariziden immer dann vor, wenn die Wirkung der Wirkstoffkombinationen größer ist als die Summe der Wirkungen der einzeln applizierten Wirkstoffe.

Die zu erwartende Wirkung für eine gegebene Kombination zweier Wirkstoffe kann nach S.R. Colby, Weeds 15 (1967), 20-22 wie folgt berechnet werden:

Wenn

X den Abtötungsgrad, ausgedrückt in % der unbehandelten Kontrolle, beim Einsatz des Wirkstoffes A in einer Aufwandmenge von m g/ha oder in einer Konzentration von m ppm bedeutet,

Y den Abtötungsgrad, ausgedrückt in % der unbehandelten Kontrolle, beim Einsatz des Wirkstoffes B in einer Aufwandmenge von n g/ha oder in einer Konzentration von n ppm bedeutet und

E den Abtötungsgrad, ausgedrückt in % der unbehandelten Kontrolle, beim Einsatz der Wirkstoffe A und B in Aufwandmengen von m und n g/ha oder in einer Konzentration von m und n ppm bedeutet,

dann ist

$$E = X + Y - \frac{X \cdot Y}{100}$$

Ist der tatsächliche insektizide oder akarizide Abtötungsgrad größer als berechnet, so ist die Kombination in ihrer Abtötung überadditiv, d.h. es liegt ein synergistischer Effekt vor. In diesem Fall muss der tatsächlich beobachtete Abtötungsgrad größer sein als der aus der oben angeführten Formel errechnete Wert für den erwarteten Abtötungsgrad (E).

Beispiel **A**

**Myzus persicae -Test**

| | | |
|---|---|---|
| Lösungsmittel: | 78 | Gewichtsteile Aceton |
| | 1,5 | Gewichtsteile Dimethylformamid |
| Emulgator: | 0,5 | Gewichtsteile Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration.

Kohlblätter (*Brassica oleracea*), die stark von der Grünen Pfirsichblattlaus (*Myzus persicae*) befallen sind, werden durch Spritzen mit der Wirkstoffzubereitung in der gewünschten Konzentration behandelt.

Nach der gewünschten Zeit wird die Abtötung in % bestimmt. Dabei bedeutet 100 %, dass alle Blattläuse abgetötet wurden; 0 % bedeutet, dass keine Blattläuse abgetötet wurden. Die ermittelten Abtötungswerte verrechnet man nach der Colby-Formel (siehe oben).

Bei diesem Test zeigen z. B. die folgenden Wirkstoffkombinationen gemäß vorliegender Anmeldung eine synergistisch verstärkte Wirksamkeit im Vergleich zu den einzeln angewendeten Wirkstoffen:

**Tabelle A, Seite 1**

| **Pflanzenschädigende Insekten Myzus persicae - Test** | | |
|---|---|---|
| **Wirkstoff** | **Konzentration in g/ha** | **Abtötung in % nach 1$^{d}$** |
| **Verbindung (I-4)** | 4<br>0,8 | 30<br>0 |
| **Verbindung (I-5)** | 0,8 | 10 |
| **Emamectin-benzoate** | 0,16 | 0 |
| **Ethiprole** | 4 | 0 |
| **Fipronil** | 20 | 30 |
| **Flonicamid** | 0,8 | 0 |

(fortgesetzt)

| Pflanzenschädigende Insekten<br>Myzus persicae - Test | | |
|---|---|---|
| **Wirkstoff** | **Konzentration in g/ha** | **Abtötung in % nach 1^d^** |
| **Indoxacarb** | 20 | 0 |
| **Rynaxapyr** | 0,8 | 0 |
| **Verbindung (I-4) + Emamectin-benzoate (25: 1)**<br>erfindungsgemäß | **4+0,16** | **gef.*** **ber.****<br>**50** **30** |
| **Verbindung (I-4) + Ethiprole (1 : 5)**<br>erfingdungsgemäß | **0,8 + 4** | **gef.*** **ber.****<br>**20** **0** |
| **Verbindung (1-4) + Fipronil (1 : 5)**<br>erfindungsgemäß | **4 + 20** | **gef.*** **ber.****<br>**99** **51** |
| **Verbindung (I-4) + Flonicamid (1 : 1)**<br>erfindungsgemäß | **4 + 4** | **gef.*** **ber.****<br>**80** **30** |
| **Verbindung (I-5) + Flonicamid (1 : 1)**<br>erfindungsgemäß | **0,8 + 0,8** | **gef.*** **ber.****<br>**50** **10** |
| **Verbindung (I-4) + Indoxacarb (1 : 5)**<br>erfindungsgemäß | **4 + 20** | **gef.*** **ber.****<br>**80** **30** |
| **Verbindung (I-4) + Rynaxapyr (5: 1)**<br>erfindungsgemäß | **4 + 0,8** | **gef.*** **ber.****<br>**80** **30** |
| *gef.=gefundeneWirkung<br>** ber. = nach der Colby-Formel berechnete Wirkung | | |

**Tabelle A, Seite 2**

| Pflanzenschädigende Insekten | | |
|---|---|---|
| **Myzus persicae - Test** | | |
| **Wirkstoff** | **Konzentration in g/ha** | **Abtötung in % nach 6^d^** |
| **Verbindung (I-6)** | 0,8<br>0,16 | 70<br>0 |
| **Verbindung (I-4)** | 0,8 | 0 |
| **Ethiprole** | 4 | 0 |
| **Fipronil** | 0,8 | 0 |
| **Metaflumizone** | 0,8 | 0 |
| **Rynaxapyr** | 0,032 | 0 |
| **Verbindung (I-6) + Ethiprole (1 : 5)**<br>erfindungsgemäß | **0,8 + 4** | **gef.*** **ber.****<br>**90** **70** |

(fortgesetzt)

| Pflanzenschädigende Insekten | | |
|---|---|---|
| Myzus persicae - Test | | |
| Wirkstoff | Konzentration in g/ha | Abtötung in % nach 6[d] |
| **Verbindung (I-6) + Fipronil (1 : 5)**<br>erfindungsgemäß | **0,16 + 0,8** | gef.* **40** ber.** **0** |
| **Verbindung (I-4) + Metaflumizone (1 : 1)**<br>erfindungsgemäß | **0,8 + 0,8** | gef.* **50** ber.** **0** |
| **Verbindung (I-6) + Rynaxapyr (5 : 1)**<br>erfindungsgemäß | **0,16 + 0,032** | gef.* **40** ber.** **0** |
| *gef.=gefundeneWirkung<br>** ber. = nach der Colby-Formel berechnete Wirkung | | |

**Tabelle A, Seite 3**

| Pflanzenschädigende Insekten | | |
|---|---|---|
| Myzus persicae - Test | | |
| Wirkstoff | Konzentration in g/ha | Abtötung in % nach 1[d] |
| **Verbindung (I-6)** | 0,16 | 0 |
| **Verbindung (I-4)** | 4 | 30 |
| **Verbindung (I-5)** | 4 | 70 |
| **Abamectin** | 0,16 | 0 |
| **Amitraz** | 4 | 0 |
| **Chlorfenapyr** | 4 | 0 |
| **Cyenopyrafen** | 4 | 0 |
| **Cyflumetofen** | 4 | 0 |
| **Cyromazine** | 4 | 0 |
| **Diafenthiuron** | 4 | 0 |
| **Fenpyroximate** | 4 | 0 |
| **Milbemectin** | 0,16 | 0 |
| **Pymetrozine** | 0,16 | 0 |
| **Verbindung (I-4) + Abamectin (25 : 1)**<br>erfindungsgemäß | **4 + 0,16** | gef.* **70** ber.** **30** |
| **Verbindung (I-4) + Amitraz (1 : 1)**<br>erfindungsgemäß | **4 + 4** | gef.* **70** ber.** **30** |
| **Verbindung (I-4) + Chlorfenapyr (1 : 1)**<br>erfingdungsgemäß | **4 + 4** | gef.* **80** ber.** **30** |

(fortgesetzt)

| Pflanzenschädigende Insekten | | |
|---|---|---|
| Myzus persicae - Test | | |
| Wirkstoff | Konzentration in g/ha | Abtötung in % nach 1[d] |
| **Verbindung (I-4) + Cyenopyrafen (1 : 1)**<br>erfindungsgemäß | **4 + 4** | **gef.* 50**   **ber.** 30** |
| **Verbindung (I-4) + Cyflumetofen (1 : 1)**<br>erfindungsgemäß | **4 + 4** | **gef.* 80**   **ber.** 30** |
| **Verbindung (I-5) + Cyromazine (1 : 1)**<br>erfingdungsgemäß | **4 + 4** | **gef.* 90**   **ber.** 70** |
| **Verbindung (1-4) + Diafenthiuron (1 : 1)**<br>erfindungsgemäß | **4 + 4** | **gef.* 70**   **ber.** 30** |
| **Verbindung (I-4) + Fenpyroximate (1 : 1)**<br>erfindungsgemäß | **4 + 4** | **gef.* 80**   **ber.** 30** |
| **Verbindung (1-6) + Milbemectin (25 : 1)**<br>erfindungsgemäß | **4 + 0,16** | **gef.* 60**   **ber.** 0** |
| **Verbindung (1-6) + Pymetrozine (1 : 1)**<br>erfindungsgemäß | **0,16 + 0,16** | **gef.* 20**   **ber.** 0** |
| **Verbindung (I-4) + Pymetrozine (1 : 1)**<br>erfindungsgemäß | **4 + 4** | **gef.* 90**   **ber.** 30** |
| *gef.=gefundeneWirkung<br>** ber. = nach der Colby-Formel berechnete Wirkung | | |

**Tabelle A, Seite 4**

| Pflanzenschädigende Insekten | | |
|---|---|---|
| Myzus persicae - Test | | |
| Wirkstoff | Konzentration in g/ha | Abtötung in % nach 6[d] |
| **Verbindung (I-4)** | 4 | 60 |
| **Verbindung (I-5)** | 0,8 | 10 |
| **Pymetrozine** | 0,8 | 50 |
| **Spinosad** | 0,8 | 0 |
| **Verbindung (I-5) + Pymetrozine (1 : 1)**<br>erfindungsgemäß | **0,8 + 0,8** | **gef.* 80**   **ber.** 55** |

(fortgesetzt)

| Pflanzenschädigende Insekten | | | |
|---|---|---|---|
| Myzus persicae - Test | | | |
| Wirkstoff | Konzentration in g/ha | Abtötung in % nach 6[d] | |
| **Verbindung (I-4) + Spinosad (1 : 1)**<br>erfindungsgemäß | **4 + 0,8** | **gef.*<br>90** | **ber.**<br>60** |
| *gef.=gefundeneWirkung<br>** ber. = nach der Colby-Formel berechnete Wirkung | | | |

Beispiel **B**

**Phaedon cochleariae - Larven -Test**

| | | |
|---|---|---|
| Lösungsmittel: | 78 | Gewichtsteile Aceton |
| | 1,5 | Gewichtsteile Dimethylformamid |
| Emulgator: | 0,5 | Gewichtsteile Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration.

Kohlblätter (*Brassica oleracea*) werden durch Spritzen mit der Wirkstoffzubereitung in der gewünschten Konzentration behandelt und mit Larven des Meerrettichblattkäfers (*Phaedon cochleariae*) besetzt, solange die Blätter noch feucht sind.

Nach der gewünschten Zeit wird die Abtötung in % bestimmt. Dabei bedeutet 100 %, dass alle Käferlarven abgetötet wurden; 0 % bedeutet, dass keine Käferlarven abgetötet wurden. Die ermittelten Abtötungswerte verrechnet man nach der Colby-Formel (siehe oben).

Bei diesem Test zeigten die folgenden Wirkstoffkombinationen gemäß vorliegender Anmeldung eine synergistisch verstärkte Wirksamkeit im Vergleich zu den einzeln angewendeten Wirkstoffen:

**Tabelle B, Seite 1**

| Pflanzenschädigende Insekten | | | |
|---|---|---|---|
| Phaedon cochleariae Larven - Test | | | |
| Wirkstoff | Konzentration in g/ha | Abtötung In % nach 2[d] | |
| **Verbindung (I-6)** | 0,8 | 0 | |
| **Verbindung (I-5)** | 0,8 | 0 | |
| **Emamectin-benzoate** | 0,032 | 0 | |
| **Verbindung (I-6) + Emamectin-benzoate (25 : 1)**<br>erfindungsgemäß | **0,8 + 0,032** | **gef.*<br>33** | **ber.**<br>0** |
| **Verbindung (I-5) + Emamectin-benzoate (25 : 1)**<br>erfindungsgemäß | **0,8 + 0,032** | **gef.*<br>50** | **ber.**<br>0** |
| *gef.=gefundeneWirkung<br>** ber. = nach der Colby-Formel berechnete Wirkung | | | |

Tabelle B, Seite 2

| Pflanzenschädigende Insekten | | |
|---|---|---|
| Phaedon cochleariae Larven - Test | | |
| Wirkstoff | Konzentration in g/ha | Abtötung In % nach 6[d] |
| **Verbindung (1-6)** | 100<br>20<br>0,8<br>0,16 | 0<br>0<br>0<br>0 |
| **Verbindung (I-4)** | 100<br>20<br>0,8 | 0<br>0<br>0 |
| **Verbindung (I-5)** | 100<br>0,8<br>0,16 | 0<br>0<br>0 |
| **Ethiprole** | 4<br>0,8 | 67<br>33 |
| **Flonicamid** | 100 | 0 |
| **Indoxacarb** | 4<br>0,8 | 33<br>0 |
| **Metaflumizone** | 100 | 0 |
| **Rynaxapyr** | 4 | 50 |
| **Verbindung (1-6) + Ethiprole (1 : 5)**<br>Erfindungsgemäß | **0,8 + 4** | **gef.*** **ber.****<br>**83** **67** |
| **Verbindung (I-4) + Ethiprole (1 : 5)**<br>Erfindungsgemäß | **0,8 + 4** | **gef.*** **ber.****<br>**100** **67** |
| **Verbindung (I-5) + Ethiprole (1 : 5)**<br>erfindungsgemäß | **0,16 + 0,8** | **gef.*** **ber.****<br>**67** **33** |
| **Verbindung (I-6) + Flonicamid (1 : 1)**<br>Erfindungsgemäß | **100 + 100** | **gef.*** **ber.****<br>**100** **33** |
| **Verbindung (I-4) + Flonicamid (1 : 1)**<br>erfindungsgemäß | **100 + 100** | **gef.*** **ber.****<br>**83** **33** |
| **Verbindung (I-5) + Flonicamid (1 : 1)**<br>erfindungsgemäß | **100 + 100** | **gef.*** **ber.****<br>**100** **33** |
| **Verbindung (1-6) + Indoxacarb (1 : 5)**<br>Erfindungsgemäß | **0,16 + 0,8** | **gef.*** **ber.****<br>**17** **0** |
| **Verbindung (I-5) + Indoxacarb (1 : 5)**<br>erfindungsgemäß | **0,8 + 4** | **gef.*** **ber.****<br>**83** **33** |

(fortgesetzt)

| Wirkstoff | Konzentration in g/ha | Abtötung In % nach 6d | |
|---|---|---|---|
| **Verbindung (1-6) + Metaflumizone (1 : 1)**<br>erfindungsgemäß | **100 + 100** | **gef.***<br>**100** | **ber.****<br>**0** |
| **Verbindung (I-4) + Metaflumizone (1 : 1)**<br>Erfindungsgemäß | **100 + 100** | **gef.***<br>**100** | **ber.****<br>**0** |
| **Verbindung (I-5) + Metaflumizone (1 : 1)**<br>erfindungsgemäß | **100 + 100** | **gef.***<br>**100** | **ber.****<br>**0** |
| **Verbindung (I-6) + Rynaxapyr (5 : 1)**<br>erfindungsgemäß | **20 + 4** | **gef.***<br>**83** | **ber.****<br>**50** |
| **Verbindung (I-4) + Rynaxapyr (5 : 1)**<br>erfindungsgemäß | **20 + 4** | **gef.***<br>**83** | **ber.****<br>**50** |
| *gef.=gefundene Wirkung<br>** ber. = nach der Colby-Formel berechnete Wirkung | | | |

**Tabelle B, Seite 3**

| Pflanzenschädigende Insekten | | | |
|---|---|---|---|
| **Phaedon cochleariae Larven - Test** | | | |
| **Wirkstoff** | **Konzentration in g/ha** | **Abtötung In % nach 2d** | |
| **Verbindung (I-6)** | 100 | 33 | |
| **Verbindung (I-4)** | 100 | 33 | |
| **Verbindung (I-5)** | 100 | 50 | |
| **Abamectin** | 4 | 67 | |
| **Chlorfenapyr** | 100 | 67 | |
| **Tebufenpyrad** | 100 | 50 | |
| **Verbindung (I-6) + Abamectin (25 : 1)**<br>Erfindungsgemäß | **100+4** | **gef.***<br>**100** | **ber.****<br>**77,89** |
| **Verbindung (1-4) + Abamectin (25 : 1)**<br>Erfindungsgemäß | **100 + 4** | **gef.***<br>**100** | **ber.****<br>**77,89** |
| **Verbindung (1-5) + Abamectin (25 : 1)**<br>erfindungsgemäß | **100 + 4** | **gef. ***<br>**100** | **ber.****<br>**83,5** |
| **Verbindung (I-6) + Chlorfenapyr (1 : 1)**<br>erfindugsgemäß | **100 + 100** | **gef.***<br>**100** | **ber.****<br>**33** |

(fortgesetzt)

| Pflanzenschädigende Insekten | | |
|---|---|---|
| Phaedon cochleariae Larven - Test | | |
| Wirkstoff | Konzentration in g/ha | Abtötung In % nach 2$^d$ |
| **Verbindung (I-4) + Chlorfenapyr (1 : 1)**<br>erfindungsgemäß | **100 + 100** | **gef.* 100**   **ber.** 33** |
| **Verbindung (I-5) + Chlorfenapyr (1 : 1)**<br>erfindungsgemäß | **100 + 100** | **gef.* 100**   **ber.** 50** |
| **Verbindung (1-6) + Tebufenpyrad (1 : 1)**<br>erfindungsgemäß | **1 + 100** | **gef.* 83**   **ber.** 50** |
| **Verbindung (I-4) + Tebufenpyrad (1 : 1)**<br>erfingdungsgemäß | **100 + 100** | **gef.* 67**   **ber.** 50** |
| **Verbindung (1-5) + Tebufenpyrad (1 : 1)**<br>erfindungsgemäß | **100 + 100** | **gef.* 83**   **ber.** 50** |
| *gef.=gefundeneWirkung<br>** ber. = nach der Colby-Formel berechnete Wirkung | | |

Tabelle B, Seite 4

| Pflanzenschädigende Insekten | | |
|---|---|---|
| Phaedon cochleariae Larven - Test | | |
| Wirkstoff | Konzentration in g/ha | Abtötung In % nach 6$^d$ |
| **Verbindung (I-6)** | 20<br>4 | 0<br>0 |
| **Verbindung (I-4)** | 100<br>20 | 33<br>0 |
| **Verbindung (I-5)** | 100<br>20 | 33<br>0 |
| **Amitraz** | 100 | 0 |
| **Cyenopyrafen** | 100 | 0 |
| **Cyflumetofen** | 100 | 0 |
| **Cyromazine** | 100<br>20 | 0<br>0 |
| **IKA 2002** | 100<br>20 | 0<br>0 |
| **Pymetrozine** | 100 | 0 |
| **Pyridaben** | 100 | 0 |
| **Spinosad** | 0,8 | 50 |

(fortgesetzt)

| Pflanzenschädigende Insekten | | | |
|---|---|---|---|
| Phaedon cochleariae Larven - Test | | | |
| Wirkstoff | Konzentration in g/ha | Abtötung In % nach 6[d] | |
| **Verbindung (I-4) + Amitraz (1 : 1)**<br>erfindungsgemäß | **100 + 100** | **gef.***<br>**83** | **ber.****<br>**33** |
| **Verbindung (I-4) + Cyenopyrafen (1 : 1)**<br>erfindungsgemäß | **100 + 100** | **gef.***<br>**50** | **ber.****<br>**33** |
| **Verbindung (I-5) + Cyenopyrafen (1 : 1)**<br>erfindungsgemäß | **100 + 100** | **gef.***<br>**67** | **ber.****<br>**33** |
| **Verbindung (I-4) + Cyflumetofen (1 : 1)**<br>erfindungsgemäß | **100 + 100** | **gef. ***<br>**50** | **ber.****<br>**33** |
| **Verbindung (I-5) + Cyflumetofen (1 : 1)**<br>erfindungsgemäß | **100 + 100** | **gef.***<br>**100** | **ber.****<br>**33** |
| **Verbindung (1-6) + Cyromazine (1 : 1)**<br>erfindungsgemäß | **20 + 20** | **gef.***<br>**33** | **ber.****<br>**0** |
| **Verbindung (1-5) + Cyromazine (1 : 1)**<br>erfindungsgemäß | **100 + 100** | **gef.***<br>**50** | **ber.****<br>**33** |
| **Verbindung (I-6) + IKA 2002** | | **gef.*** | **ber.**** |
| **(1 : 1)**<br>erfingdungsgemäß | **20 + 20** | **33** | **0** |
| **Verbindung (1-5) + IKA 2002 (1 : 1)**<br>erfindungsgemäß | **100 + 100** | **gef.***<br>**67** | **ber.****<br>**33** |
| **Verbindung (1-6) + Pymetrozine (1 : 1)**<br>erfindungsgemäß | **100 + 100** | **gef.***<br>**67** | **ber.****<br>**33** |
| **Verbindung (I-5) + Pymetrozine (1 : 1)**<br>erfindungsgemäß | **100 + 100** | **gef.***<br>**100** | **ber.****<br>**33** |
| **Verbindung (1-6) + Pyridaben (1 : 1)**<br>Erfindungsgemäß | **20 + 20** | **gef.***<br>**33** | **ber.****<br>**0** |
| **Verbindung (1-4) + Pyridaben (1 : 1)**<br>erfindungsgemäß | **20 + 20** | **gef.***<br>**33** | **ber.****<br>**0** |
| **Verbindung (I-5) + Pyridaben (1 : 1)**<br>erfindungsgemäß | **20 + 20** | **gef.***<br>**83** | **ber.****<br>**0** |

(fortgesetzt)

| Pflanzenschädigende Insekten | | |
|---|---|---|
| Phaedon cochleariae Larven - Test | | |
| Wirkstoff | Konzentration in g/ha | Abtötung In % nach $6^d$ |
| **Verbindung (I-5) + Spinosad (5 : 1)**<br><br>erfindungsgemäß | **4 + 0,8** | **gef.*** **ber.****<br>**83** **50** |
| *gef.=gefundeneWirkung<br>** ber. = nach der Colby-Formel berechnete Wirkung | | |

Beispiel C

**Spodoptera frugiperda - Larven -Test**

| | | |
|---|---|---|
| Lösungsmittel: | 78 | Gewichtsteile Aceton |
| | 1,5 | Gewichtsteile Dimethylformamid |
| Emulgator: | 0,5 | Gewichtsteile Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration.

Kohlblätter (*Brassica oleracea*) werden durch Spritzen mit der Wirkstoffzubereitung in der gewünschten Konzentration behandelt und mit Larven des Heerwurms (*Spodoptera frugiperda*) besetzt, solange die Blätter noch feucht sind.

Nach der gewünschten Zeit wird die Abtötung in % bestimmt. Dabei bedeutet 100 %, dass alle Raupen abgetötet wurden; 0 % bedeutet, dass keine Raupen abgetötet wurden. Die ermittelten Abtötungswerte verrechnet man nach der Colby-Formel (siehe oben).

Bei diesem Test zeigen die folgenden Wirkstoffkombinationen gemäß vorliegender Anmeldung eine synergistisch verstärkte Wirksamkeit im Vergleich zu den einzeln angewendeten Wirkstoffen:

**Tabelle C, Seite 1**

| Pflanzenschädigende Insekten | | |
|---|---|---|
| Spodoptera frugiperda Larven - Test | | |
| Wirkstoff | Konzentration in g/ha | Abtötung In % nach $2^d$ |
| **Verbindung (I-6)** | 20 | 0 |
| **Emamectin-Benzoate** | 0,8 | 50 |
| **Verbindung (I-6) + Emamectin-Benzoate (1 : 1)**<br><br>erfindungsgemäß | **20 + 0,8** | **gel.*** **ber.****<br>**67** **50** |
| *gef.=gekndeneWirkung<br>** ber. = nach der Colby-Formel berechnete Wirkung | | |

**Tabelle C, Seite 2**

| **Pflanzenschädigende Insekten** | | | |
|---|---|---|---|
| **Spodoptera frugiperda Larven - Test** | | | |
| Wirkstoff | Konzentration in g/ha | Abtötung In % nach 6d | |
| **Verbindung (I-6)** | 20<br>0,8 | 0<br>0 | |
| **Verbindung (I-4)** | 100<br>0,8<br>0,16 | 0<br>0<br>0 | |
| **Verbindung (I-5)** | 20<br>0,8<br>0,16 | 0<br>0<br>0 | |
| **Fipronil** | 0,8 | 17 | |
| **Indoxacarb** | 4<br>0,8 | 83<br>33 | |
| **Metaflumizone** | 100<br>20 | 83<br>0 | |
| **Rynaxapyr** | 0,16 | 33 | |
| **Verbindung (I-5) + Fipronil (1 : 5)**<br>erfindungsgemäß | **0,16 + 0,8** | gef.*<br>**33** | ber.**<br>**17** |
| **Verbindung (I-6) + Indoxacarb (1 : 5)**<br>Erfindungsgemäß | **0,8 + 4** | gef.*<br>**100** | ber.**<br>**83** |
| **Verbindung (I-4) + Indoxacarb (1 : 5)**<br>Erfingdungsgemäß | **0,16 + 0,8** | gef.*<br>**50** | ber.**<br>**33** |
| **Verbindung (I-5) + Indoxacarb (1 : 5)**<br>erfindungsgemäß | **0,8 + 4** | gef.*<br>**100** | ber.**<br>**83** |
| **Verbindung (I-6) + Metaflumizone (1 : 1)**<br>Erfindungsgemäß | **20 + 20** | gef.*<br>**50** | ber.**<br>**0** |
| **Verbindung (I-4) + Metaflumizone (1 : 1)**<br>Erfindungsgemäß | **100 + 100** | gef.*<br>**100** | ber.**<br>**83** |
| **Verbindung** (I-5) + **Metaflumizone (1 : 1)**<br>erfindungsgemäß | **20 + 20** | gef.*<br>**33** | ber.**<br>**0** |
| **Verbindung (1-6) + Rynaxapyr (5 : 1)**<br>erfindungsgemäß | **0,8 + 0,16** | gef.*<br>**83** | ber.**<br>**33** |

(fortgesetzt)

| Pflanzenschädigende Insekten | | |
|---|---|---|
| **Spodoptera frugiperda Larven - Test** | | |
| **Wirkstoff** | **Konzentration in g/ha** | **Abtötung In % nach 6[d]** |
| **Verbindung (I-4) + Rynaxapyr (5 : 1)**<br>erfindungsgemäß | **0,8 + 0,16** | **gef.*** **ber.****<br>**67** **33** |
| *gef.=gefundeneWirkung<br>** ber. = nach der Colby-Formel berechnete Wirkung | | |

**Tabelle C, Seite 3**

| Pflanzenschädigende Insekten | | |
|---|---|---|
| **Spodoptera frugiperda Larven - Test** | | |
| **Wirkstoff** | **Konzentration in g/ha** | **Abtötung In % nach 2[d]** |
| **Verbindung (I-6)** | 20<br>4 | 0<br>0 |
| **Verbindung (I-4)** | 20<br>4 | 0<br>0 |
| **Verbindung (I-5)** | 20<br>4 | 0<br>0 |
| **Chlorfenapyr** | 20 | 33 |
| **Spinosad** | 0,8 | 0 |
| **Verbindung (I-6) + Chlorfenapyr (1 : 1)**<br>erfindungsgemäß | **20 + 20** | **gef.*** **ber.****<br>**83** **33** |
| **Verbindung (I-4) + Chlorfenapyr (1 : 1)**<br>erfindungsgemäß | **20 + 20** | **gef.*** **ber.****<br>**50** **33** |
| **Verbindung (I-5) + Chlorfenapyr (1 : 1)**<br>erfindungsgemäß | **20 + 20** | **gef.*** **ber.****<br>**83** **33** |
| **Verbindung (I-6) + Spinosad (5 : 1)**<br>erfindungsgemäß | **4 + 0,8** | **gef.*** **ber.****<br>**33** **0** |
| **Verbindung (I-4) + Spinosad (5 : 1)**<br>erfindungsgemäß | **4 + 0,8** | **gef.*** **ber.****<br>**33** **0** |
| **Verbindung (1-5) + Spinosad (5 : 1)**<br>erfindungsgemäß | **4 + 0,8** | **gef.*** **ber.****<br>**33** **0** |
| *gef.=gefundeneWirkung<br>** ber. = nach der Colby-Formel berechnete Wirkung | | |

Beispiel D

**Tetranychus urticae - Test** (OP-resistent/Spritzbehandlung)

| | | |
|---|---|---|
| Lösungsmittel: | 78 | Gewichtsteile Aceton |
| | 1,5 | Gewichtsteile Dimethylformamid |
| Emulgator: | 0,5 | Gewichtsteile Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration.

Bohnenblattscheiben (Phaseolus vulgaris), die von allen Stadien der Gemeinen Spinnmilbe (Tetranychus urticae) befallen sind, werden mit einer Wirkstoffzubereitung der gewünschten Konzentration gespritzt.

Nach der gewünschten Zeit wird die Wirkung in % bestimmt. Dabei bedeutet 100 %, dass alle Spinnmilben abgetötet wurden; 0 % bedeutet, dass keine Spinnmilben abgetötet wurden.

Bei diesem Test zeigten die folgenden Wirkstoffkombinationen gemäß vorliegender Anmeldung eine synergistisch verstärkte Wirksamkeit im Vergleich zu den einzeln angewendeten Wirkstoffen:

**Tabelle D, Seite 1**

| **Pflanzenschädigende Milben** | | |
|---|---|---|
| **Tetranychus urticae - Test** | | |
| **Wirkstoff** | **Konzentration in g/ha** | **Abtötung in % nach 2$^d$** |
| **Verbindung (I-6)** | 20<br>0,16 | 0<br>0 |
| **Verbindung (I-4)** | 20<br>4<br>0,8 | 0<br>0<br>0 |
| **Verbindung (I-5)** | 4<br>0,16 | 0<br>0 |
| **Abamectin** | 0,0064 | 50 |
| **Cyenopyrafen** | 0,8<br>0,16 | 50<br>0 |
| **Diafenthiuron** | 100 | 0 |
| **Pyridaben** | 20 | 50 |
| **Spinosad** | 4 | 20 |
| **Tebufenpyrad** | 4 | 10 |
| **Verbindung (I-6) + Abamectin (25 : 1)**<br>erfindungsgemäß | **0,16 + 0,0064** | **gef.*** **70** / **ber.**** **50** |
| **Verbindung (1-5) + Abamectin (25 : 1)**<br>erfindungsgemäß | **0,16 + 0,0064** | **gef.*** **70** / **ber.**** **50** |
| **Verbindung (I-4) + Cyenopyrafen (1 : 1)**<br>erfindungsgemäß | **0,8 + 0,8** | **gef.*** **90** / **ber.**** **50** |

(fortgesetzt)

| Pflanzenschädigende Milben | | | |
|---|---|---|---|
| Tetranychus urticae - Test | | | |
| Wirkstoff | Konzentration in g/ha | Abtötung in % nach 2$^d$ | |
| **Verbindung (I-5) + Cyenopyrafen (1 : 1)** erfindungsgemäß | **0,16 + 0,16** | **gef.*** **20** | **ber.**** **0** |
| **Verbindung (I-4) + Diafenthiuron (1 : 1)** erfindungsgemäß | **100 + 100** | **gef.*** **90** | **ber.**** **0** |
| **Verbindung (I-5) + Diafenthiuron (1 : 1)** erfindungsgemäß | **100 + 100** | **gef.*** **50** | **ber.**** **0** |
| **Verbindung (I-4) + Pyridaben (1 : 1)** erfindungsgemäß | **20 + 20** | **gef.*** **80** | **ber.**** **50** |
| **Verbindung (I-6) + Spinosad (5 : 1)** erfindungsgemäß | **20 + 4** | **gef.*** **40** | **ber.**** **20** |
| **Verbindung (I-4) + Spinosad** | | **gef.*** | **ber.**** |
| **(5 : 1)** erfindungsgemäß | **20 + 4** | **50** | **20** |
| **Verbindung (I-4) + Tebufenpyrad (1 : 1)** erfindungsgemäße | **4 + 4** | **gef.*** **30** | **ber.**** **10** |
| **Verbindung (I-5) + Tebufenpyrad (1 : 1)** erfindungsgemäß | **4 + 4** | **gef.*** **30** | **ber.**** **10** |
| * gef.=ge&ndeneWirkung<br>** ber. = nach der Colby-Formel berechnete Wirkung | | | |

**Tabelle D, Seite 2**

| Pflanzenschädigende Milben<br>Tetranychus urticae - Test | | |
|---|---|---|
| Wirkstoff | Konzentration in g/ha | Abtötung in % nach 6$^d$ |
| **Verbindung (I-6)** | 100<br>4 | 50<br>0 |
| **Verbindung (I-4)** | 4 | 0 |
| **Verbindung (I-5)** | 4 | 0 |
| **Cyflumetofen** | 4 | 70 |
| **Diafenthiuron** | 100 | 0 |
| **Fenpyroximate** | 4 | 0 |
| **Milbemectin** | 0,16 | 0 |

(fortgesetzt)

| Pflanzenschädigende Milben<br>Tetranychus urticae - Test | | |
|---|---|---|
| Wirkstoff | Konzentration in g/ha | Abtötung in % nach 6[d] |
| **Verbindung (I-6) + Cyflumetofen (1 : 1)**<br>erfindungsgemäß | **4 + 4** | **gef.* 100 ber.** 70** |
| **Verbindung (I-4) + Cyflumetofen (1 : 1)**<br>erfindungsgemäß | **4 + 4** | **gef.* 100 ber.** 70** |
| **Verbindung (1-5) + Cyflumetofen (1 : 1)**<br>erfindungsgemäße | **4 + 4** | **gef.* 100 ber.** 70** |
| **Verbindung (I-6) + Diafenthiuron (1 : 1)**<br>erfindungsgemäß | **100 + 100** | **gef.* 100 ber.** 50** |
| **Verbindung (I-6) + Fenpyroximate (1 : 1)**<br>erfindiingsgemäß | **4 + 4** | **gef.* 40 ber.** 0** |
| **Verbindung (I-4) + Fenpyroximate (1 : 1)**<br>erfindungsgemäß | **4 + 4** | **gef.* 40 ber.** 0** |
| **Verbindung (I-5) + Fenpyroximate (1 : 1)**<br>erfindungsgemäß | **4 + 4** | **gef.* 70 ber.** 0** |
| **Verbindung (I-6) + Milbemectin (25 : 1)**<br>erfindungsgemäß | **4 + 0,16** | **gef.* 30 ber.** 0** |
| **Verbindung (I-4) + Milbemectin (25 : 1)**<br>erfindungsgemäße | **4 + 0,16** | **gef.* 70 ber.** 0** |
| **Verbindung (I-5) + Milbemectin (25 : 1)**<br>erfindungsgemäß | **4 + 0,16** | **gef.* 90 ber.** 0** |
| *gef.=gefundeneWirkung<br>** ber. = nach der Colby-Formel berechnete Wirkung | | |

**Patentansprüche**

1. Wirkstoffkombinationen enthaltend mindestens eine Verbindung der Formel (I)

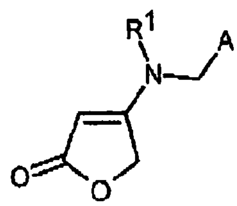

(I),

in welcher eine Verbindung der Formel (I) eine Verbindung ausgewählt aus der Gruppe bestehend aus

(I-4) 4-{[(6-Chlorpyrid-3-yl)methyl](2-fluorethyl)amino}furan-2(5H)-on,
(I-5) 4-{[(6-Chlorpyrid-3-yl)methyl]2,2-difluorethyl)amino}furan-2(5H)-on, oder
(I-6) 4-{[(6-Chlor-5-tluorpyrid-3yl)metyl](methyl)amino}furan-2(5H)-on ist

und mindestens eine Verbindung ausgewählt aus der Gruppe bestehend aus

(2-1) Spinosad
(2-3) Abamectin
(2-4) Emamectin-Benzoat
(2-5) Milbemectin
(2-8) Indoxacarb
(2-9) Fipronil
(2-10) Ethiprole
(2-14) Chlorfenapyr
(2-15) Diafenthiuron
(2-19) Tebufenpyrad
(2-20) Fenpyroximate
(2-21) Cyenopyrafen
(2-29) Cyflumetofen
(2-30) Amitraz
(2-31) Cyromazine
(2-40) Pyridaben
(2-42) Flonicamid
(2-45) Pymetrozine
(2-46) Pyrifluquinazon
(2-47) Rynaxapyr
(2-49) Metaflumizone
(2-53) IKA 2002; O-{(E)-2-(4-chlorophenyl)-2-cyano-1-[2-(trifluoromethyl)phenyl] ethenyl} S-methyl thiocarbonat.

**2.** **Wirkstoffkombinationen gemäß Anspruch 1, dadurch gekennzeichnet, dass die Verbindung der Formel (I)**

(I-5) 4-{[(6-Chlorpyrid-3-yl)methyl](2,2-difluorethyl)amino}furan-2(5H)-on ist.

**3.** Verwendung einer Wirkstoffkombination, wie in Anspruch 1 oder 2 definiert, zur Bekämpfung tierischer Schädlinge.

**4.** Verfahren zur Bekämpfung tierischer Schädlinge, **dadurch gekennzeichnet, dass** man eine wirkstoffkombination, wie in Anspruch 1 oder 2 definiert, auf tierische Schädlinge und/oder deren Lebensraum und/oder Saatgut einwirken lässt

**5.** Verfahren nach Anspruch 4, **dadurch gekennzeichnet dass** man einen Wirkstoff der Formel (I) und einen der Wirkstoffe (2-1) bis (2-53) zur gleichen Zeit auf Saatgut einwirken lässt.

**6.** Verfahren zur Herstellung insektizider und akarizider Mittel, **dadurch gekennzeichnet, dass** man eine Wirkstoffkombination, wie in Anspruch 1 oder 2 definiert, mit Streckmitteln und/oder oberflächenaktiven Stoffen vermischt

**7.** Verwendung einer Wirkstoffkombination gemäß Anspruch 1 oder 2 zur Behandlung von Saatgut.

**8.** Verwendung einer Wirkstoffkombination gemäß Anspruch 1 oder 2 zur Behandlung von transgenen Pflanzen.

**9.** Verwendung einer Wirkstoffkombination gemäß Anspruch 1 oder 2 zur Behandlung von Saatgut transgener Pflanzen.

**10.** Saatgut mit einer Umhüllung umfassend eine Wirkstoffkombination gemäß Anspruch 1 oder 2; oder einer Umhüllung

und einer weiteren Schicht umfassend eine Wirkstoffkombination gemäß Anspruch 1 oder 2, oder mit einer Umhüllung und weiteren Schichten umfassend eine Wirkstoffkombination gemäß Anspruch 1 oder 2.

**11.** Saatgut mit mehreren Schichten, wobei mindestens ein Wirkstoff der Formel (I) und mindestens eine Phthalsäurediamidverbindung wie in Anspruch 1 oder 2 beschrieben in unterschiedlichen Schichten auf das Sattgut aufgebracht sind.

## Claims

**1.** Active substance combinations containing at least one compound of the formula (I)

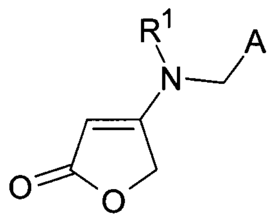

(I),

in which a compound of the formula (I) is a compound selected from the group consisting of (I-4) 4-{[(6-chloropyrid-3-yl)methyl](2-fluoroethyl)amino}furan-2(5H)-one, (1-5) 4-{[(6-chloro-pyrid-3-yl)methyl](2,2-difluoroethyl)amino}furan-2(5H)-one, or (1-6) 4-{[(6-chloro-5-fluoropyrid-3-yl) methyl] (methyl) amino}furan-2(5H)-one,
and at least one compound selected from the group consisting of

(2-1) spinosad
(2-3) abamectin
(2-4) emamectin-benzoate
(2-5) milbemectin
(2-8) indoxacarb
(2-9) fipronil
(2-10) ethiprole
(2-14) chlorfenapyr
(2-15) diafenthiuron
(2-19) tebufenpyrad
(2-20) fenpyroximate
(2-21) cyenopyrafen
(2-29) cyflumetofen
(2-30) amitraz
(2-31) cyromazine
(2-40) pyridaben
(2-42) flonicamid
(2-45) pymetrozine
(2-46) pyrifluquinazon
(2-47) rynaxapyr
(2-49) metaflumizone
(2-53) IKA 2002; O-{(E)-2-(4-chlorophenyl)-2-cyano-1-[2-(trifluoromethyl)phenyl]-ethenyl} S-methyl thiocarbonate.

**2.** Active substance combinations according to Claim 1, **characterized in that** the compound of the formula (I) is (1-5) 4-{[(6-chloropyrid-3-yl)methyl]2,2-difluoroethyl)amino}furan-2(5H)-one.

**3.** Use of an active substance combination as defined in Claim 1 or 2 for controlling animal pests.

4. Method of controlling animal pests, **characterized in that** an active substance combination as defined in Claim 1 or 2 is allowed to act on animal pests and/or their environment and/or on seed.

5. Method according to Claim 4, **characterized in that** an active substance of the formula (I) and one of the active substances (2-1) to (2-53) are simultaneously allowed to act on seed.

6. Method for the preparation of insecticidal and acaricidal compositions, **characterized in that** an active substance combination as defined in Claim 1 or 2 is mixed with extenders and/or surface-active substances.

7. Use of an active substance combination according to Claim 1 or 2 for the treatment of seed.

8. Use of an active substance combination according to Claim 1 or 2 for the treatment of transgenic plants.

9. Use of an active substance combination according to Claim 1 or 2 for the treatment of seed of transgenic plants.

10. Seed having a coat comprising an active substance combination according to Claim 1 or 2; or a coat and a further layer comprising an active substance combination according to Claim 1 or 2, or having a coat and further layers comprising an active substance combination according to Claim 1 or 2.

11. Seed having a plurality of layers, at least one active substance of the formula (I) and at least one phthalic diamide compound as described in Claim 1 or 2 being applied in different layers to the seed.

## Revendications

1. Associations de substances actives contenant au moins un compos de formule (I)

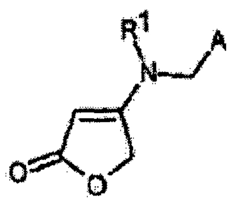

(I),

dans lesquelles un compos de formule (I) est un compos choisi dans le groupe constitu par

(1-4) la 4-{[(6-chloropyrid-3-yl)m thyl](2-fluoro-thyl)amino}furan-2(5H)-one,
(1-5) la 4-{[(6-chloropyrid-3-yl)m thyl](2,2-difluoro-thyl)amino}furan-2(5H)-one, ou
(1-6) la 4-[(6-chloro-5-fluoropyrid-3-yl)m thyl]-(m thyl)amino}furan-2(5H)-one

et au moins un compos choisi dans le groupe constitu par

(2-1) le spinosad
(2-3) l abamectine
(2-4) l mamectine-benzoate
(2-5) la milb mectine
(2-8) l indoxacarb
(2-9) le fipronil
(2-10) l thiprole
(2-14) le chlof napyr
(2-15) le diafenthiuron
(2-19) le t bufenpyrad
(2-20) le fenpyroximate
(2-21) le cy nopyraf ne

(suite)

| | |
|---|---|
| (2-29) | le cyflum tofen |
| (2-30) | l amitraze |
| (2-31) | la cyromazine |
| (2-40) | le pyridab ne |
| (2-42) | le flonicamide |
| (2-45) | la pym trozine |
| (2-46) | la pyrifluquinazone |
| (2-47) | le rynaxapyr |
| (2-49) | la m taflumizone |
| (2-53) | IKA 2002 ; O-{(E)-2-(4-chloroph nyl)-2-cyano-1-[2-(trifluorom thyl)ph nyl] th nyle} S-m thyl-thiocarbonate. |

**2.** Associations de substances actives selon la revendication 1, caract ris es en ce que le compos de formule (I) est (1-5) la 4-[(6-chloropyrid-3-yl)m thyl](2,2-difluoro-thyl)amino}furan-2(5H)-one.

**3.** Utilisation d une association de substances actives, telle que d finie dans la revendication 1 ou 2, pour la lutte contre des ravageurs animaux.

**4.** Proc d pour la lutte contre des ravageurs animaux, caract ris en ce qu on fait agir sur les ravageurs animaux et/ou leur habitat et/ou des semences une association de substances actives telle que d finie dans la revendication 1 ou 2.

**5.** Proc d selon la revendication 4, caract ris en ce qu on fait agir sur des semences en m me temps une substance active de formule (I) et 1 une des substances actives (2-1) (2-53).

**6.** Proc d pour la pr paration de compositions insecticides et acaricides, caract ris en ce qu on m lange une association de substances actives, telle que d finie dans la revendication 1 ou 2, avec des excipients et/ou des substances tensioactives.

**7.** Utilisation d une association de substances actives selon la revendication 1 ou 2, pour le traitement de semences.

**8.** Utilisation d une association de substances actives selon la revendication 1 ou 2, pour le traitement de plantes transg niques.

**9.** Utilisation d une association de substances actives selon la revendication 1 ou 2, pour le traitement de semences de plantes transg niques.

**10.** Semence dot e d un enrobage comprenant une association de substances actives selon la revendication 1 ou 2 ; ou d un enrobage et d une autre couche comprenant une association de substances actives selon la revendication 1 ou 2, ou dot e d un enrobage et d autres couches comprenant une association de substances actives selon la revendication 1 ou 2.

**11.** Semence dot e de plusieurs couches, au moins une substance active de formule (I) et au moins un compos de type diamide d acide phtalique tel que d crit dans la revendication 1 ou 2 tant appliqu s en diff rentes couches sur la semence.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0539588 A
- WO 2007115644 A
- WO 2007115643 A
- WO 2007115646 A
- EP 0375316 A
- DE 2717040 A
- EP 0089202 A
- JP 50029742 B
- WO 9211249 A
- EP 0295117 A
- DE 19653417 A
- EP 347488 A
- EP 210487 A
- EP 289879 A
- EP 234045 A
- JP 2003201280 B
- WO 2002014263 A
- DE 02061132 A
- DE 02736876 A
- EP 134439 A
- EP 0580374 A
- EP 0314615 A
- EP 01097932 A
- WO 03015519 A
- EP 00462456 A
- WO 9835935 A
- US 4272417 A
- US 4245432 A
- US 4808430 A
- US 5876739 A
- US 20030176428 A1
- WO 2002080675 A1
- WO 2002028186 A2
- WO 1992005251 A
- WO 1995009910 A
- WO 199827806 A
- WO 2005002324 A
- WO 2006021972 A
- US 6229072 B
- WO 8910396 A
- WO 1991002069 A
- WO 200166704 A
- EP 0837944 A
- WO 2000066746 A
- WO 2000066747 A
- WO 2002026995 A
- US 5776760 A
- US 5463175 A
- WO 2002036782 A
- WO 2003092360 A
- WO 2005012515 A
- WO 2007024782 A
- WO 2001024615 A
- WO 2003013226 A
- US 5561236 A
- US 5648477 A
- US 5646024 A
- US 5273894 A
- US 5637489 A
- US 5276268 A
- US 5739082 A
- US 5908810 A
- US 7112665 B
- WO 1996038567 A
- WO 1999024585 A
- WO 1999024586 A
- WO 1999034008 A
- WO 200236787 A
- WO 2004024928 A
- US 5605011 A
- US 5378824 A
- US 5141870 A
- US 5013659 A
- US 5767361 A
- US 5731180 A
- US 5304732 A
- US 4761373 A
- US 5331107 A
- US 5928937 A
- WO 1996033270 A
- WO 2004040012 A
- WO 2004106529 A
- WO 2005020673 A
- WO 2005093093 A
- WO 2006007373 A
- WO 2006015376 A
- WO 2006024351 A
- WO 2006060634 A
- US 5084082 A
- WO 199741218 A
- US 5773702 A
- WO 1999057965 A
- US 5198599 A
- WO 2001065922 A
- WO 2007027777 A
- WO 199421795 A
- WO 2000004173 A
- EP 04077984 A

- EP 06009836 A
- WO 2004090140 A
- EP 04077624 A
- WO 2006133827 A
- EP 07002433 W
- EP 0571427 A
- WO 1995004826 A
- EP 0719338 A
- WO 199615248 A
- WO 199619581 A
- WO 199627674 A
- WO 199711188 A
- WO 199726362 A
- WO 199732985 A
- WO 199742328 A
- WO 199744472 A
- WO 199745545 A
- WO 199827212 A
- WO 199840503 A
- WO 9958688 A
- WO 199958690 A
- WO 199958654 A
- WO 2000008184 A
- WO 2000008185 A
- WO 200028052 A
- WO 200077229 A
- WO 200112782 A
- WO 200112826 A
- WO 2002101059 A
- WO 2003071860 A
- WO 2004056999 A
- WO 2005030942 A
- WO 2005030941 A
- WO 2005095632 A
- WO 2005095617 A
- WO 2005095619 A
- WO 2005095618 A
- WO 2005123927 A
- WO 2006018319 A
- WO 2006103107 A
- WO 2006108702 A
- WO 2007009823 A
- WO 200022140 A
- WO 2006063862 A
- WO 2006072603 A
- WO 2002034923 A
- EP 06090134 A
- EP 06090228 A
- EP 06090227 A
- EP 07090007 A
- EP 07090009 A
- WO 200114569 A
- WO 200279410 A
- WO 200333540 A
- WO 2004078983 A
- WO 200119975 A
- WO 199526407 A
- WO 199634968 A
- WO 199820145 A
- WO 199912950 A
- WO 199966050 A
- WO 199953072 A
- US 6734341 B
- WO 200011192 A
- WO 199822604 A
- WO 199832326 A
- WO 200198509 A
- WO 2005002359 A
- US 5824790 A
- US 6013861 A
- WO 1994004693 A
- WO 1994009144 A
- WO 199411520 A
- WO 199535026 A
- WO 199720936 A
- EP 0663956 A
- WO 1996001904 A
- WO 1996021023 A
- WO 1998039460 A
- WO 1999024593 A
- WO 1995031553 A
- US 2002031826 A
- US 6284479 B
- US 5712107 A
- WO 1997047806 A
- WO 1997047807 A
- WO 1997047808 A
- WO 200014249 A
- WO 200073422 A
- WO 2000047727 A
- EP 06077301 A
- US 5908975 A
- EP 0728213 A
- WO 2006032538 A
- WO 2007039314 A
- WO 2007039315 A
- WO 2007039316 A
- JP 2006304779 A
- WO 2005012529 A
- WO 1998000549 A
- WO 2004053219 A
- WO 2001017333 A
- WO 0245485 A
- WO 2005017157 A
- WO 2006136351 A
- US 5969169 A
- US 5840946 A
- US 6323392 B
- US 6063 A
- US 947 A
- US 6270828 B
- US 6169190 B
- US 5965755 A
- US 5434283 A

**In der Beschreibung aufgeführte Nicht-Patentliteratur**


- The Pesticide Manual. British Crop Protection Council, 2006
- **R. WEGLER.** Chemie der Pflanzenschutz- und Schädlingsbekämpfungsmittel. Springer Verlag, 1970, vol. 2, 401-412
- **COMAI et al.** *Science,* 1983, vol. 221, 370-371
- **BARRY et al.** *Curr. Topics Plant Physiol.,* 1992, vol. 7, 139-145
- **SHAH et al.** *Science,* 1986, vol. 233, 478-481
- **GASSER et al.** *J. Biol. Chem.,* 1988, vol. 263, 4280-4289
- *Tranel und Wright, Weed Science,* 2002, vol. 50, 700-712
- **CRICKMORE et al.** *Microbiology and Molecular Biology Reviews,* 1998, vol. 62, 807-813
- **CRICKMORE et al.** *Bacillus thuringiensis -Toxinnomenklatur aktualisiert,* 2005, http://www.lifesci.sussex.ac.uk/Home/Neil_Crickmore/Bt
- **MOELLENBECK et al.** *Nat. Biotechnol.,* 2001, vol. 19, 668-72
- **SCHNEPF et al.** *Applied Environm. Microb.,* 2006, vol. 71, 1765-1774
- **S.R. COLBY.** *Weeds,* 1967, vol. 15, 20-22